# EUROPEAN PATENT SPECIFICATION

(11) **EP 3 016 523 B1**
(45) Date of publication and mention of the grant of the patent: **02.09.2020**
(21) Application number: 14820623.8
(22) Date of filing: 01.07.2014
(51) Int. Cl.: A23K 10/00, A23K 10/10, A23K 10/18, A23K 40/20, A23K 10/20, A23K 10/30, A23K 50/00, A23K 50/40, A23K 50/50

(54) **HUMAN DIET EQUIVALENT ANIMAL FEED**
TIERFUTTER ALS ÄQUIVALENT FÜR MENSCHLICHE ERNÄHRUNG
ALIMENT POUR ANIMAUX ÉQUIVALENT À UN RÉGIME ALIMENTAIRE POUR HUMAIN

(30) Priority: 01.07.2013 US 201361841786 P; 22.08.2013 US 201361869047 P
(43) Date of publication of application: 11.05.2016
(60) Divisional application: 20167385.2
(73) Proprietor: Washington University, Saint Louis, MO 63130 (US); Intercontinental Great Brands LLC, East Hanover, NJ 07936 (US)
(72) Inventor: HAYASHI, David, East Hanover, New Jersey 07936 (US); MARTINI, Peggy, East Hanover, New Jersey 07936 (US); GORDON, Jeffrey, St. Louis, Missouri 63130 (US); LYLE, Barbara, East Hanover, New Jersey 07936 (US)
(74) Representative: Greaves Brewster LLP
(86) International application number: PCT/US2014/045121
(87) International publication number: WO 2015/002990

(56) References cited:
- WO-A1-03/061706
- WO-A1-2009/135778
- WO-A1-2011/149513
- WO-A2-2005/025322
- GB-A- 2 464 769
- US-A1- 2003 054 085
- US-A1- 2011 189 303
- US-B2- 8 268 374
- ALINK G M ET AL: "A study on the carcinogenicity of human diets in rats: The influence of heating and the addition of vegetables and fruit", FOOD AND CHEMICAL TOXICOLOGY, PERGAMON, GB, vol. 27, no. 7, 1 January 1989 (1989-01-01), pages 427-436, XP023742542, ISSN: 0278-6915, DOI: 10.1016/0278-6915(89)90028-8 [retrieved on 1989-01-01]
- V. K. Ridaura ET AL: "Gut Microbiota from Twins Discordant for Obesity Modulate Metabolism in Mice", Science, NIH Author Manuscript, vol. 341, no. 6150, 5 September 2013 (2013-09-05), pages 1241214-1241214, XP55621085, US ISSN: 0036-8075, DOI: 10.1126/science.1241214

## Description

### FIELD OF THE INVENTION

The present invention provides animal feed compositions comprising a human diet equivalent, and related methods.

### BACKGROUND OF THE INVENTION

When animal models are employed in the study of human disease, they are frequently selected because of their similarity to humans in terms of genetics, anatomy, and physiology. Also, animal models are often preferable for experimental disease research because of their ease of manipulation. For example, to obtain scientifically valid research, the conditions associated with an experiment must be closely controlled. This often means manipulating only one variable while keeping others constant, and then observing the consequences of that change. In addition, to test hypotheses about how a disease develops, an adequate number of subjects must be used to statistically test the results of the experiment. Therefore, scientists cannot conduct research on just one animal or human, and it is easier for scientists to use sufficiently large numbers of animals (rather than people) to attain significant results.

Diet and nutritional statues are among the most modifiable determinants of human health. The nutritional value of food is influenced in part by a person's gut microbial community (microbiota) and its component genes (microbiome). Unraveling the interrelations among diet, the structure and operations of the gut microbiota, and nutrient and energy harvest is confounded by variations in human environmental exposures, microbial ecology and genotype. Animal models of the human gut ecosystem have helped to advance our understanding of these complex relationships. Similar advances in animal diets are also needed.

Historically, studies seeking to understand effects of diet have relied either on traditional animal chow supplemented with one or more nutrients or a cafeteria diet approach (Free Radical Biology and Medicine (2013) 65: 254-261; Physiology and Behavior (1977) 18: 1021-1026; Obesity (2011) 19: 1109-1117)., Both approaches fail to reflect human consumption patterns, nor do they rigorously ensure nutritional adequacy and consistency. Thus, there remains a need in the art for animal feed rations that more closely mirror human food consumption patterns in a format that allows for the animal to get a controlled amount and ratio of foods equivalent to a representative diet of a specific human sub-population.

GB2464769, US8268374, WO2011/149513 and Alink et al. (1989) Food Chem. Toxicol. vol. 27 p 427-436 disclose animal feed compositions.

### SUMMARY OF THE INVENTION

In an aspect, the present disclosure encompasses an animal feed composition consisting of a human diet equivalent. The human diet equivalent consists of 45-53% by wet weight carbohydrates, 1-4% by wet weight total dietary fiber, 20-25% by wet weight fat, 7-9% total saturated fatty acids of fat, 83-88 mg cholesterol/100g total human diet equivalent (TD), 19-23% by wet weight protein, 800-1000 mg sodium/100g TD, 300-500 mg potassium/100g TD, 4-8% by wet weight moisture, and 4.6-4.9 Kcal/g TD. The human diet equivalent is made from a defined ratio of eight food groups. The eight food groups consist of food items identified by the first three or four digits of an eight digit food code as represented in Table A, wherein milk and milk products have a food code with a first digit of 1 and are 5-25% by wet weight; meat, poultry, fish, egg, nuts, seeds, and legumes have a food code with a first digit selected from the group consisting of 2, 3, and 4 and are 10-25% by wet weight; grain products have a food code with a first digit of 5 and are 10-20% by wet weight; fruits have a food code with a first digit of 6 and are 0-1% by wet weight; vegetables have a food code with a first digit of 7 and are 0-1% by wet weight; fats and oils have a food code with a first digit of 8 and are 0.5-5.0% by wet weight; sugars and sweets have a food code with a first digit of 9 and a second digit of 1 and are 0.5-5.0% by wet weight; beverages have a food code with a first digit of 9 and a second digit of 2 or 3 and are 10-60% by wet weight.

In yet another aspect, the present disclosure encompasses a process to prepare pelletized animal feed comprising the above composition. The process comprises (i) introducing two or more food items independently selected from the group consisting of frozen food items, refrigerated food items, and room temperature food items into a first mixer and blending the food items, wherein the first mixer is a high shear liquid mixer; (ii) passing and/or recirculating the blended food items into a second mixer to form a homogenous composite, wherein the second mixer is a rotor-stator mixer and the homogenized composite is evenly blended by visual inspection; (iii) freeze drying the homogenous composite and milling the dehydrated composite to a 20 mesh size, wherein the moisture content of the dehydrated composite is less than 5%; and (iv) adding water to the milled composite and extruding into pellets, wherein the moisture content of the composite at the end of the extrusion process is less than 10%.

Also disclosed i but not pertaining to the invention is a method of determining the effect of at least one dietary supplement on a subject. The method comprises administering or feeding a composition of any of the compositions described herein further comprising at least one dietary supplement to a subject and determining the presence or absence of a difference in the subject after administering the composition comprising the dietary supplement. The presence or absence of a difference in the subject represents the effect of the dietary supplement on the subject.

Also disclosed i but not pertaining to the invention is a method of determining the effect of at least one dietary supplement on a subject. The method comprises (1) administering or feeding a first composition to a subject for a first period of time, wherein the first composition is a composition disclosed herein, (2) administering or feeding a second composition to the subject for a second period of time, wherein the second composition consists of the first composition and at least one dietary supplement, and (3) determining the presence or absence of a difference in the subject after administering or feeding the second composition. The presence or absence of a difference in the subject represents the effect of the dietary supplement on the subject.

Also disclosed i but not pertaining to the invention is a method of determining the effect of at least one dietary supplement on a subject. The method comprises (1) administering or feeding a first composition to a subject for a first period of time, wherein the first composition is a composition disclosed herein and at least one dietary supplement, (2) administering or feeding a second composition to the subject for a second period of time, wherein the second composition consists of the first composition without the at least one dietary supplement, and (3) determining the presence or absence of a difference in the subject after administering or feeding the second composition. The presence or absence of a difference in the subject represents the effect of the dietary supplement on the subject

### BRIEF DESCRIPTION OF THE FIGURES

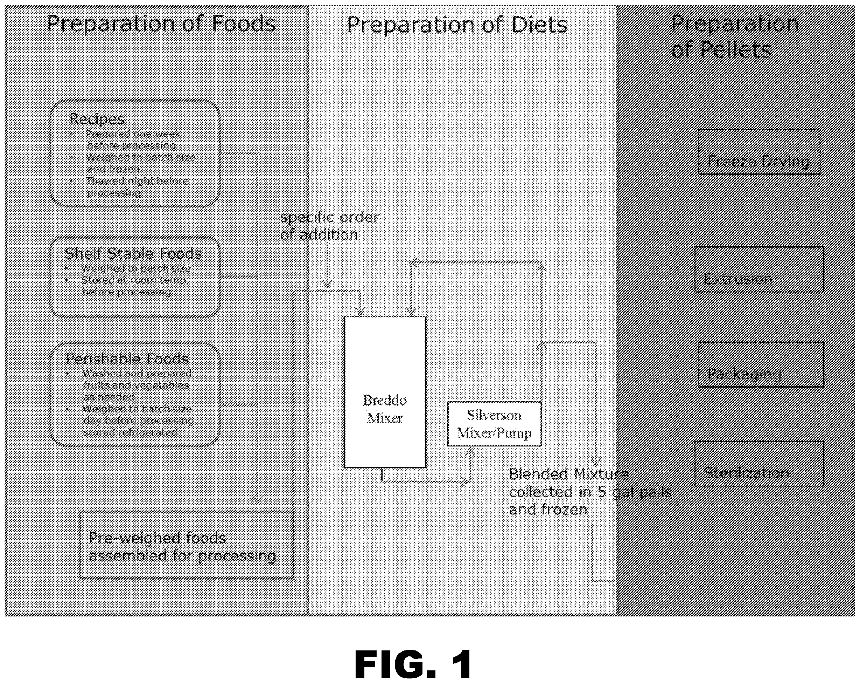

**FIG. 1** depicts a production process flow diagram.

Disclosed herein are methods for creating a human diet equivalent for use in animal feed, animal feed compositions comprising human diet equivalents, and methods for processing human foods into a homogenous animal feed ration. Critically, the processes that convert human foods into homogenous animal feed rations provide an even mix of foods in the right quantitative portions while retaining nutrients. This approach also overcomes any taste issues that can be associated with eating particular bitter and sour foods by creating a homogenous composite of foods that is palatable to the animals. As a result, the animal feed compositions accurately model the human diet, deliver known amounts and ratios of nutrients, and can be processed into a structurally stable form. Animal feed compositions differing in the amounts of one or more food items may be used to test the impact of diet on various facets of a mouse model, and are particularly well suited to test how gut microbes adapt to dietary perturbations. Methods for deriving an animal feed composition from a human diet, animal feed compositions comprising human diet equivalents, and processes for producing said compositions are described in further detail below.

### METHODS FOR CREATING A HUMAN DIET EQUIVALENT FOR USE IN ANIMAL FEED

Disclosed herein are methods for creating a human diet equivalent for use in an animal feed ration. Generally speaking, a human diet equivalent is constructed from one or more foods that characterize a particular human diet. Stated another way, a human diet equivalent comprises at least one food item typically consumed by a human. The terms "food" and "food items" are defined below. A method for creating a human diet equivalent typically comprises (i) collecting information on what people eat, (ii) analyzing the data in order to identify one or more subpopulations, (iii) identifying one or more foods that characterize a subpopulation, and (iv) determining the proportion of each characterizing food item to be included in the human diet equivalent.

The present disclosure utilizes methods for collecting information on what people eat. Such information is needed in order to determine the foods a person typically eats. Suitable methods for collecting information on what people eat are known in the art, and may include, but are not limited to, 24-hour recalls and food diaries recorded by an individual. A skilled artisan may conduct the food survey or may rely on a previously conducted food survey(s). Such surveys are well known to a skilled artisan and may include, but are not limited to, What We Eat in America (WWEIA), which is the dietary intake interview component of the National Health and Nutrition Examination Survey (NHANES), United States Department of Agriculture (USDA) Nationwide Food Surveys, and World Food Surveys conducted by the Food and Agricultural Organization of the United Nations.

After data collection, a skilled artisan needs a way to translate the food intake data into a form that can be used for analysis. In some embodiments, the USDA Food and Nutrient Database for Dietary Studies (FNDDS) is used. The USDA FNDDS is a resource that is used to code dietary intakes and to calculate nutrients for WWEIA and other food surveys. The FNDDS is based on nutrient values in the USDA National Nutrient Database for Standard Reference, Release 22 (Agricultural Research Service, Nutrient Data Laboratory, 2009). Other suitable food coding schemes may be used, provided the scheme provides nutrient values and weights for typical food portions and food items.

The USDA FNDDS provides a unique eight digit food code for specific foods. This food coding scheme provides an outline of the major food groups and subgroups by the first 1 to 4 digits of the food code. The coding scheme is represented in **Table A.** The first digit in the food code identifies one of nine major food groups: (1) milk and milk products, (2) meat, poultry, fish, and mixtures, (3) eggs, (4) legumes, nuts and seeds, (5) grain products, (6) fruits, (7) vegetables, (8) fats, oils and salad dressings, and (9) sugars, sweets and beverages. The second, third and (sometimes) fourth digits of the food code identify increasingly more specific subgroups within the nine major food groups. Most subgroups are identified by the first three digits, except for some subgroups in the Meat, Poultry, Fish and Mixtures, and Sugar, Sweet and Beverages section. A "food item", as used herein, refers to a food that is represented by a complete eight-digit FNDDS code or equivalent thereof. The term "food", as used herein, may refer to a food item, a food subgroup (i.e. the second, third, or fourth digit of an eight digit FNDDS food code, or the equivalent thereof), or a major food group (i.e. the first digit of an eight digit FNDDS food code, or the equivalent thereof). The term "food" includes both foods and beverages. Further details regarding the USDA FNDDS may be found in The USDA Food and Nutrient Database for Dietary Studies, 4.1- Documentation and User Guide (2010. Beltsville, MD: U.S. Department of Agriculture, Agricultural Research Service, Food Surveys Research Group), incorporated herein by reference in its entirety.

The present disclosure utilizes an approach for identifying one or more subpopulations within a total population by characterizing one or more diet patterns of the population. A subpopulation may be identified based on an analysis of the consumption of the total daily intakes of foods. For example, a subpopulation may be identified based on an analysis of all foods consumed, an analysis of the amount of the types of foods consumed, an analysis of the calories derived from one or more types of food consumed, or a combination thereof. Other suitable subpopulations for analysis will also be apparent to a skilled artisan and are contemplated by the invention. In some embodiments, a subpopulation may be identified based on an analysis of the consumption of at least one food. In other embodiments, a subpopulation may be identified based on an analysis of the consumption of at least two foods. In still other embodiments, a subpopulation may be identified based on an analysis of the consumption of at least three foods. In yet other embodiments, a subpopulation may be identified based on an analysis of the consumption of at least four foods. In different embodiments, a subpopulation may be identified based on an analysis of the consumption of at least five foods. In each of the above embodiments, the analysis may occur at the major food group level (i.e. the first digit of an eight digit FNDDS food code, or the equivalent thereof), at a food subgroup level (i.e. the second, third, or fourth digit of an eight digit FNDDS food code, or the equivalent thereof), or at the food item level (i.e. a complete eight-digit FNDDS code, or equivalent thereof).

Subpopulations may also be identified based on a nutritional analysis of the foods consumed. Suitable nutrients and food associated compounds may include, but are not limited to total fat, saturated fat, monounsaturated fat, polyunsaturated fat, trans saturated fat, cholesterol, carbohydrate, total sugars, dietary fiber, Vitamin A, Vitamin B6, Vitamin B12, Vitamin C, Vitamin D, Vitamin E, Vitamin K1, Thiamin, Riboflavin, Niacin, Folate, Pantothenic acid, Calcium, Phosphorus, Magnesium, Manganese, Iron, Zinc, Copper, Selenium, Sodium, Potassium, Fructose, Sucrose, Glucose, Lactose, Maltose, Fatty acid distribution, amino acid distribution, betacarotene, retinol, alphatocopherol, betatocopherol, gammatocopherol, deltatocopherol, alphatoctrienol, betatoctrienol, gammatocotrienol, deltatocotrienol, apo-8-carotenal, trans-lycopene, cis-lycopene, trans-beta-carotene, cis-beta-carotene, caffeine, and combinations thereof. In some embodiments, a subpopulation may be identified based on an analysis of the consumption of at least one nutrient. In other embodiments, a subpopulation may be identified based on an analysis of the consumption of at least two nutrients. In still other embodiments, a subpopulation may be identified based on an analysis of the consumption of at least three nutrients. In yet other embodiments, a subpopulation may be identified based on an analysis of the consumption of at least four nutrients. In different embodiments, a subpopulation may be identified based on an analysis of the consumption of at least five nutrients.

A subpopulation may be identified based on saturated fat intake, or based on total fruit intake, or based on total vegetable intake, or based on total fruit and vegetable intake, or based on saturated fat intake and either total vegetable intake or total fruit intake, or based on saturated fat intake and total fruit and vegetable intake.

Once the basis of each grouping has been determined, as described above, the total sample may be divided into two or more subpopulations. For example, the total sample may be divided into groups of two, groups of three, groups of four, groups of five, groups of six, groups of seven, groups of eight, groups of nine, or groups of ten or more. Alternatively, the total sample may be divided into groups of 10, 20, 30, 40, 50, 60, 70, 80, 90 or 100 or more. Groups may or may not be split equally, depending on the type of statistical analysis performed. Suitable methods are well known in the art. The terms "high" and "low" may represent the highest and lowest group in the distribution, or some combination of lowest groups and highest groups in the distribution. In some embodiments, the total sample may be divided into quintiles. In preferred embodiments, the total sample may be divided in tertiles.

A first subpopulation may comprise the highest quintile saturated fat intake and lowest quintile fruit and vegetable intake, and a second subpopulation comprises the lowest quintile saturated fat intake and highest quintile fruit and vegetable intake. A first subpopulation may consist of the highest quintile saturated fat intake and lowest quintile fruit and vegetable intake, and a second subpopulation consists of the lowest quintile saturated fat intake and highest quintile fruit and vegetable intake. The quintile may be a tertile.

Also disclosed are methods for identifying foods that characterize the diet of a subpopulation. The method comprises identifying food groups and subgroups that characterize the diet of a subpopulation (i.e. a "key food group" or "key food subgroup") and then selecting one or more food items that characterize the key food group or key food subgroup.

Generally speaking, for each subpopulation, key food subgroups may be identified by determining the relative energy intakes by major food group and food subgroup and the proportion of the subpopulation consuming foods within individual food subgroups. Preferably, the following criteria are used to identify key food subgroups: (1) Food subgroups providing less than 20 kcal/1000 kcal total diet (i.e., less than 2.0% of energy) are excluded from consideration; (2) Within each food subgroup providing from 20 to 50 kcal/1000 kcal total diet (i.e., 2.0 to 5.0% of energy), the single food subgroup representing the largest source of energy is selected as a key food subgroup; (3) Within each food group providing more than 50 kcal/1000 kcal total diet (i.e., over 5.0% of total energy), all food subgroups meeting at least one of the following two criteria were considered key food subgroups (a) Contributing at least 10% of kcal per 1000 kcal for the food group and consumed by at least 10% of the subpopulation, or (b) Consumed by 20% or more of the subpopulation. Finally, once each key food group or key food subgroup has been identified, the food code with the greatest weighted proportion of members of the subpopulation reporting consumption on the day of recall is selected to be the key food item characterizing the entire food group or key food subgroup.

The present disclosure utilizes methods for determining the proportion of each characterizing food to be included in an animal feed composition. The method comprises determining the relative energy contributions from key food subgroups to the total energy intake from the food group (per 1000 kcal total diet) and then determining the weight of the food item (in g) required to deliver the calculated energy contribution from the relevant food group per 1000 kcal total diet.

### ANIMAL FEED COMPOSITIONS COMPRISING HUMAN DIET EQUIVALENTS CONSTRUCTED FROM ONE OR MORE FOODS THAT CHARACTERIZE A HISF-LOFV DIET OR LOSF-HIFV DIET

The present invention encompasses an animal feed composition comprising a human diet equivalent that is constructed from one or more foods that characterize a high saturated fat, low fruit and vegetable diet (HiSF-LoFV diet). Methods for constructing a human diet equivalent are described above.

The human diet equivalent that is constructed from one or more foods that characterize a HiSF-LoFV diet has the right proportions of nutrients for each particular diet. The human diet equivalent consists of 45-53% by wet weight carbohydrates, 1-10% by wet weight total dietary fiber, 20-25% by wet weight fat, 7-9% total saturated fatty acids of fat, 83-88 mg cholesterol /100g total diet (TD), 19-23% by wet weight protein, 800-1000 mg sodium/100g TD, 300-500 mg potassium/100g TD, 4-8% by wet weight moisture, and 4.6-4.9 Kcal/g TD; wherein the human diet equivalent is made from a defined ratio of eight food groups, the eight food groups consisting of food items identified by the first three or four digits of an eight digit food code as represented in Table A, wherein (a) milk and milk products have a food code with a first digit of 1 and are 5-25% by wet weight; (b) meat, poultry, fish, egg, nuts, seeds, and legumes have a food code with a first digit selected from the group consisting of 2, 3, and 4 and are 10-25% by wet weight; (c) grain products have a food code with a first digit of 5 and are 10-20% by wet weight; (d) fruits have a food code with a first digit of 6 and are 0-1% by wet weight; (e) vegetables have a food code with a first digit of 7 and are 0-1% by wet weight; (f) fats and oils have a food code with a first digit of 8 and are 0.5-5.0% by wet weight; (g) sugars and sweets have a food code with a first digit of 9 and a second digit of 1 and are 0.5-5.0% by wet weight; and (h) beverages have a food code with a first digit of 9 and a second digit of 2 or 3 and are 10-60% by wet weight. A human diet equivalent of the invention is made from a defined ratio of eight food groups selected from the groups consisting of (i) milk and milk products, (ii) meat, poultry, fish, egg, nuts seeds and legumes, (iii) grain products, (iv) fruits, (v) vegetables, (vi) fats and oils, (vii) sugars and sweets, and (viii) beverages. In some embodiments, the eight food groups consist of food items identified by the first three or four digits of an eight digit food code as represented in **Table A,** wherein (i) milk and milk products have a food code with a first digit of 1, (ii) meat, poultry, fish, egg, nuts seeds and legumes have a food code with a first digit selected from the group consisting of 2, 3, and 4, (iii) grain products have a food code with a first digit of 5, (iv) fruits have a food code with a first digit of 6, (v) vegetables have a food code with a first digit of 7, (vi) fats and oils have a food code with a first digit of 8, (vi) sugars and sweets have a first food code with a first digit of 9 and a second digit of 1, and (h) beverages have a food code with a first digit of 9 and a second digit of 2 or 3. In other embodiments the eight food groups consist of food items defined by a different food scheme.

Constructing a human diet equivalent from a defined ratio of the eight food groups ensures the nutrients present in the animal feed mirror the proportion of nutrients in the equivalent human diet.

The number of food items that comprise a human diet equivalent can vary provided that the human diet equivalent has the right proportion of nutrients and/or the correct ratio of eight food groups. Generally speaking, a human diet equivalent is comprised of at least 6 food items. For example, a human diet equivalent may be comprised of at least 6, at least 7, at least 8, at least 9, at least 10, at least 11, at least 12, at least 13, at least 14, at least, 15, at least 16, at least 17, at least 18, at least 19, at least 20, at least 21, at least 22, at least 23, at least 24, at least 25, at least 26, at least 27, at least 28, at least 29, or at least 30 food items.

The composition may further comprise a dietary supplement. As used herein, a "dietary supplement" is any component added to the compositions described herein. A dietary supplement may be an amount of a food or food item, as defined herein. Non-limiting examples of a dietary supplement may be milk or milk product, meat, poultry, fish, egg, nuts, seeds, legumes, grains, fruits, vegetables, fats, oils, sugars, sweets, beverages, vitamins, minerals, herbs, botanicals, and amino acids. For example, a dietary supplement may be acai, aloe vera, anabolic steroids, astragalus, bilberry, bitter orange, black cohosh, butterbur, calcium, carnitine, cartilage (bovine and shark), cat's claw, chamomile, chasteberry, chondroitin, chromium, cinnamon, coenzyme Q10, colloidal silver, cranberry, vitamin C, candelion, echinacea, ephedra, essiac/flor-essence, European elder, evening primrose oil, fenugreek, feverfew, fish oil, flaxseed, folate, garlic, ginger, ginkgo, ginseng, glucosamine, goldenseal, grape seed extract, green tea, hawthorn, hoodia, horse chestnut, iodine, iron, kava, lavender, licorice root, magnesium, melatonin, milk thistle, mistletoe, noni, omega-3 fatty acids, PC-SPES, peppermint oil, red clover, sage, SAMe (S-adenosyl-L-methionine), saw palmetto, selenium, soy, St. John's wort, tea, thunder God vine, turmeric, valerian, vitamin A, vitamin B12, vitamin B6, vitamin C, vitamin D, vitamin E, vitamin K, yohimbe, and zinc. Additionally, a dietary supplement may be derived from a food or food item. For example, a dietary supplement may be derived from cereal grains, legumes, nuts, seeds, fruits and/or vegetables. A dietary supplement may be high in non-digestible carbohydrates and antioxidants. Suitable examples of a dietary supplement high in non-digestible carbohydrates and antioxidants may include agave, chicory, banana, barley, buckwheat, canary seed, chia, cocoa, coffee, corn, fonio, grape, guar, job tears, millet, millet seed, oat, quinoa, rice, rye, sorghum, soy, spelt, teff, tigernut, triticale, wheat bran, acacia and citrus fruits. A dietary supplement may be about 0-10% by wet weight of the compositions described above. For example, a dietary supplement may be about 0.1, 0.2, 0.3, 0.4, 0.5, 0.6, 0.7, 0.8, 0.9 or 1% wet weight of the compositions described above. Alternatively, a dietary supplement may be about 1, 2, 3, 4, 5, 6, 7, 8, 9 or 10% wet weight of the compositions described above. For a dietary supplement that is a milk or milk product, meat, poultry, fish, egg, nuts, seed, legume, grain, fruit, vegetable, fat, oil, sugar, sweet, and/or beverage, the dietary supplement may be about 1, 2, 3, 4, 5, 6, 7, 8, 9 or 10% wet weight of the compositions described above. For a dietary supplement that is a vitamin, mineral, herb, botanical, and/or amino acid, the dietary supplement may be about 0.1, 0.2, 0.3, 0.4, 0.5, 0.6, 0.7, 0.8, 0.9 or 1% wet weight of the compositions described above.

The composition of the invention may be processed into a form for animal consumption. In preferred embodiments, compositions of the invention are formulated as chow for a laboratory animal. Non-limiting examples of a laboratory animal may include rodents, canines, felines, and non-human primates. In some embodiments, the animal is a mouse. In other embodiments, the animal is a rat. In still other embodiments, the animal is a guinea pig. In yet other embodiments, the animal is a hamster. Methods for processing human foods into an animal feed ration are described below in Section III and further detailed in the Examples.

### PROCESSES FOR PRODUCING AN ANIMAL FEED COMPOSITION COMPRISING A HUMAN DIET EQUIVALENT

In another aspect, the present invention encompasses processes for producing an animal feed composition comprising a human diet equivalent. Suitable animal feed compositions are described. The process comprises (i) introducing one or more food items selected from the group consisting of a frozen food item, a refrigerated food item, a room temperature food item, and a combination thereof into a first mixer and blending the food items, (ii) passing the blended food items into a second mixer to form a homogenous composite, (iii) dehydrating the homogenous composite and milling the dehydrated composite to a 20 mesh size, and (iv) processing the milled composite into its final form. Step (ii) can be optionally incorporated into step (i) through a recirculation loop that is connected to the vessel carrying out the first mixing step. In certain embodiments, the composition in its final form may then be packaged and/or sterilized by gamma irradiation. Sterilization by gamma irradiation may occur before or after packaging, or a combination thereof.

The process starts with frozen, refrigerated and/or room temperature food items. Generally, the food items will characterize a diet of a subpopulation and, in total, will provide the right proportions of nutrients for each particular diet. The food items, or the ingredients to make a food item, may be purchased from a grocery store, a farmers market or any other vendor that sells food items or the ingredients to make them. A food item may be used as is or may be prepared from ingredients. Typical preparation methods may include, but are not limited to, peeling, coring, cutting, chopping, dicing, grating, shredding, mincing, de-seeding, kneading, milling, mixing, blending, thawing, boiling, blanching, braising, coddling, infusing, simmering, steaming, steeping, stewing, grilling, broiling, frying, sautéing, microwaving, roasting, searing, pickling, salting, seasoning, marinating, brining, and drying. Recipes for preparing food items that require preparation are known in the art. Food items that require preparation may be prepared as needed, or may be made days, weeks or months in advance, optionally weighed into batches, and frozen until needed.

Steps (i) and (ii) of the process comprise intimate mixing. Intimate mixing, as used herein, refers to high shear mixing, homogenization, such as through a homogenizer, sonification, or through ultrasonification. Intimate mixing disperses food items (present as liquid, solid and/or gas) into a main continuous liquid phase, with which it would normally be immiscible. A rotor or impellor, alone or together with a stationary component known as a stator, or an array of rotors and stators, is used either in a tank containing the solution to be mixed, or in a pipe through which the solution passes, to create shear. The end result of steps (i) and (ii) is a homogeneous composite mixture. As used herein, the term "homogenous composite mixture" or "homogenous composite" refers to a mixture that is an emulsion, a suspension, or an emulsion and a suspension. Intimate mixing may or may not occur in combination with other kinds of mixing, for example, static mixing. Non-limiting examples of intimate mixers includes a rotor-stator type homogenizer or mixer, a high pressure homogenizer, a high shear granulator, a batch high-shear mixer, and an impeller mixer (including both an axial flow impeller and a radial flow impeller). In some embodiments, mixing is provided by a high shear mixer. In other embodiments, mixing is provided by a rotor-stator mixer. In still other embodiments, mixing is provided by a homogenizer. In alternative embodiments, mixing is provided by more than one mixer. In preferred embodiments, mixing is provided by a first mixer and a second mixer, wherein the first mixer is a high shear mixer and the second mixer is a rotor-stator type mixer. In an exemplary embodiment, a first mixer is a Breddo mixer and a second mixer is a Silverson Mixer/Pump.

The process comprises introducing one or more food items selected from the group consisting of a frozen food item, a refrigerated food item, a room temperature food item, or a combination thereof into a first mixer. For example, the process may comprise introducing 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 or more food items into a first mixer. In embodiments where more than one food item is added to a first mixer, each food item is independently selected from the group consisting of a frozen food item, a refrigerated food item, and a room temperature food item.

Food items may or may not be added to a first mixer in a particular order. In some embodiments, food items are added to a first mixer in a particular order. In other embodiments, food items are added to a first mixer in a random order. A suitable order for the addition of food items to a first blender for a HiSF-LoFV diet is provided in the Examples. Those skilled in the art should, however, in light of the present disclosure, appreciate that changes can be made to the order disclosed and still obtain a like or similar result without departing from the spirit and scope of the invention.

The first mixer is a high shear mixer. For example, the first mixer may be an impeller mixer. The type of impeller can vary, provided the impeller type produces sufficient shear for the blending process to achieve a homogenous emulsion and/or suspension. The size of the impeller can and will vary depending on other parameters. In some embodiments, the impeller diameter is about 12.7 cm to 91.4 cm (5 to about 36 inches). For example, the impeller diameter may be about 12.7 cm (5 inches), about 15.2 cm (6 inches), about 17.7 cm (7 inches), about 20.3 cm (8 inches), about 22.8 cm (9 inches), about 25.4 cm (10 inches), about 27.9 cm (11 inches), about 30.4 cm (12 inches), about 35.5 cm (14 inches), about 38.1 cm (15 inches), about 40.6 cm (16 inches), about 43.8 cm (17 inches), about 45.7 cm (18 inches), about 48.2 cm (19 inches), about 50.8 cm (20 inches), about 53.3 cm (21 inches), about 55.8 cm (22 inches), about 58.4 cm (23 inches), about 60.9 cm (24 inches), about 63.5 cm (25 inches), about 66 cm (26 inches), about 68.5 cm (27 inches), about 71.1 cm (28 inches), about 73.6 cm (29 inches), about 76.2 cm (30 inches), about 78.7 cm (31 inches), about 81.2 cm (32 inches), about 83.8 cm (33 inches), about 86.3 cm (34 inches), about 88.9 cm (35 inches), or about 91.4 cm (36 inches). In other embodiments, the impeller diameter is about 12.7 cm to 25.4 cm (5 to about 10 inches). In still other embodiments, the impeller diameter is about 25.4 cm to 38.1 cm (10 to about 15 inches). In different embodiments, the impeller diameter is about 38.1 cm to 50.8 cm (15 to about 20 inches). In still different embodiments, the impeller diameter is about 50.8 cm to 63.5 cm (20 to about 25 inches). In alternative embodiments, the impeller diameter is about 88.9 cm to 76.2 cm (35 to about 30 inches). In additional embodiments, the impeller diameter is about 76.2 cm to 91.4 cm (30 to about 36 inches). The rotations per minutes (rpm) of the impeller can vary in each of the above embodiments. In some embodiments, the speed ranges from about 1500 rpm to about 3500 rpm. In certain embodiments the speed is 1500 rpm, 1600 rpm, 1700 rpm, 1800 rpm, 1900 rpm, 2000 rpm, 2100 rpm, 2200 rpm, 2300 rpm, 2400 rpm, 2500 rpm, 2600 rpm, 2700 rpm, 2800 rpm, 2900 rpm, 3000 rpm, 3100 rpm, 3200 rpm, 3300 rpm, 3400 rpm, or 3500 rpm. In preferred embodiments, the speed does not exceed 2000 rpm.

To facilitate blending, food items added to a first mixer are recirculated or passed through a second mixer until evenly blended by visual inspection. In a preferred embodiment, the second mixer is a rotor-stator type mixer. The size of the rotor can and will vary depending on other parameters. In some embodiments, the rotor diameter is about 2.5 cm to 60.9 cm (1 to about 24 inches). For example, the rotor diameter may be about 2.5 cm (1 inch), about 5 cm (2 inches), about 7.6 cm (3 inches), about 10.1 cm (4 inches), about 12.7 cm (5 inches), about 15.2 cm (6 inches), about 17.7 cm (7 inches), about 20.3 cm (8 inches), about 22.8 cm (9 inches), about 25.4 cm (10 inches), about 27.9 cm (11 inches), about 30.4 cm (12 inches), about 35.5 cm (14 inches), about 38.1 cm (15 inches), about 40.6 cm (16 inches), about 43.8 cm (17 inches), about 45.7 cm (18 inches), about 48.2 cm (19 inches), about 50.8 cm (20 inches), about 53.3 cm (21 inches), about 55.8 cm (22 inches), about 58.4 cm (23 inches), or about 60.9 cm (24 inches). In other embodiments, the rotor diameter is about 2.5 cm to 12.7 cm (1 to about 5 inches). In still other embodiments, the rotor diameter is about 12.7 cm to 25.4 cm (5 to about 10 inches). In yet other embodiments, the rotor diameter is about 25.4 cm to 38.1 cm (10 to about 15 inches). In different embodiments, the rotor diameter is about 38.1 cm to 50.8 cm (15 to about 20 inches). In still different embodiments, the rotor diameter is about 50.8 cm to 60.9 cm (20 to about 24 inches). The rotations per minutes (rpm) of the rotor can vary in each of the above embodiments. In some embodiments, the speed ranges from about 1500 rpm to about 3500 rpm. In certain embodiments the speed is 1500 rpm, 1600 rpm, 1700 rpm, 1800 rpm, 1900 rpm, 2000 rpm, 2100 rpm, 2200 rpm, 2300 rpm, 2400 rpm, 2500 rpm, 2600 rpm, 2700 rpm, 2800 rpm, 2900 rpm, 3000 rpm, 3100 rpm, 3200 rpm, 3300 rpm, 3400 rpm, or 3500 rpm. In preferred embodiments, the speed does not exceed 2000 rpm.

In a preferred embodiment, the first mixer is attached through a recirculating loop to the second mixer that is in-line. The recirculating loop may be chosen from any suitable material including, but not limited to, tubing or piping. The second mixer may be optionally employed when, following blending with the first mixer, the mixture comprises a visible distribution of particle sizes in order to create an even particle size distribution.

Temperature may also be controlled during mixing. The temperature of the mixture is generally maintained as cool as possible while maintaining the mixture in a liquid phase. Preferably, the maximum temperature during steps (i) and (ii) is about 15.6°C (60°F).

The residence time from the introduction of the food items to the end of step (ii) may range from about 10 minutes to about 120 minutes, and is dependent, on multiple factors related to process design. In some embodiments, residence time is about 10 minutes, about 15 minutes, about 20 minutes, about 25 minutes, about 30 minutes, about 35 minutes, about 40 minutes, about 45 minutes, about 50 minutes, about 55 minutes, about 60 minutes, about 65 minutes, about 70 minutes, about 75 minutes, about 80 minutes, about 85 minutes, about 90 minutes, about 95 minutes, about 100 minutes, about 105 minutes, about 110 minutes, about 115 minutes, or about 120 minutes. In other embodiments, residence time is about 10 to about 40 minutes. In still other embodiments, residence time is about 20 to about 50 minutes. In still other embodiments, residence time is about 30 to about 60 minutes. In still other embodiments, residence time is about 40 to about 70 minutes. In still other embodiments, residence time is about 50 to about 80 minutes. In still other embodiments, residence time is about 60 to about 90 minutes. In still other embodiments, residence time is about 70 to about 100 minutes. In still other embodiments, residence time is about 80 to about 110 minutes. In still other embodiments, residence time is about 90 to about 120 minutes. In a preferred embodiment, residence time does not exceed 2 hours.

A homogenous composite produced by the process of the invention is collected and dehydrated.. The homogenous composite is freeze dried. Briefly, a homogenous composite is frozen in an appropriate container, finely shredded and placed in a vacuum chamber until available moisture was reduced. The moisture content of the freeze dried composite is generally reduced to less than 10%. For example, the moisture content of the freeze dried composite may be reduced to less than 10%, less than 9%, less than 8%, less than 7%, less than 6%, less than 5%, less than 4%, less than 3%, less than 2%, or less than 1%. In some embodiments, the moisture content of the freeze dried composite is about 1% to about 5%. In other embodiments, the moisture content of the freeze dried composite is about 5% to about 10%. In different embodiments, the moisture content of the freeze dried composite is about 1% to about 3%. In still different embodiments, the moisture content of the freeze dried composite is about 3% to about 6%. In alternative embodiments, the moisture content of the freeze dried composite is about 6% to about 9%.

The temperature and pressure of freeze drying can and will vary in order to achieve the described moisture content. In some embodiments, the temperature is about -20°C to about -60°C. For example, the temperature may be about -20°C, about -21°C, about -22°C, about -23°C, about -24°C, about -25°C, about -26°C, about -27°C, about -28°C, about -29°C, about -30°C, about -31°C, about -32°C, about - 33°C, about -34°C, about -35°C, about -36°C, about -37°C, about -38°C, about -39°C, about -40°C, about -41°C, about -42°C, about -44°C, about -44°C, about -45°C, about - 46°C, about -47°C, about -48°C, about -49°C, about -50°C, about -51°C, about -52°C, about -53°C, about -54°C, about -55°C, about -56°C, about -57°C, about -58°C, about - 59°C, or about -60°C. In some embodiments, the pressure of the vacuum chamber is about 0.001 mbar to about 30 mbar. For example, the pressure of the vacuum chamber may be about 0.001 mbar to about 0.010 mbar, about 0.010 mbar to about 0.100 mbar, about 0.100 mbar to about 1.000 mbar, about 1.000 mbar to about 10.000 mbar, or about 10.000 mbar to about 30.000 mbar. In another example, the pressure of the vacuum chamber may be about 1, about 2, about 3, about 4, about 5, about 6, about 7, about 8, about 9, about 10, about 11, about 12, about 13, about 14, about 15, about 16, about 17, about 18, about 19, about 20, about 21, about 22, about 23, about 24, about 25, about 26, about 27, about 28, about 29, about 30 mbar.

Dehydrated composite is milled to a suitable size for processing to a final form. The type of 'grind' (i.e. coarse, medium or fine) plays an important part in press output and quality of final form. Very coarse grinds have the added disadvantage of providing breaking points in the cubes or pellets. Medium and fine grinds generally will result in higher pelleting capacity than a coarse grind. In some embodiments, dehydrated composite is ground to a uniform size. In other embodiments, dehydrated composite is ground to a mixture of grinds of differing fineness. Dehydrated composite of the invention is generally ground to a mesh size of about 5 to about 100. In some embodiments, dehydrated composite is milled to about a 5 mesh size to about a 20 mesh size. In other embodiments, dehydrated composite is milled to about a 15 mesh size to about a 30 mesh size. In still other embodiments, dehydrated composite is milled to about a 25 mesh size to about a 40 mesh size. In yet other embodiments, dehydrated composite is milled to about a 35 mesh size to about a 50 mesh size. In still other embodiments, dehydrated composite is milled to about a 45 mesh size to about a 60 mesh size. In still other embodiments, dehydrated composite is milled to about a 55 mesh size to about a 70 mesh size. In still other embodiments, dehydrated composite is milled to about a 65 mesh size to about a 80 mesh size. In still other embodiments, dehydrated composite is milled to about a 75 mesh size to about a 90 mesh size. In still other embodiments, dehydrated composite is milled to about a 85 mesh size to about a 100 mesh size. In different embodiments, dehydrated composite is milled to at least a 40 mesh size. In alternative embodiments, dehydrated composite is milled to at least a 30 mesh size. In a preferred embodiment, dehydrated composite is milled to at least a 20 mesh size. In another preferred embodiment, dehydrated composite is milled to a 20 mesh size. Methods for milling are well known in the art.

The milled composite is then processed into a final form. In some embodiments, the milled composite is processed into a liquid. In other embodiments, the milled composite is processed into a dried form. Non-limiting examples of suitable dried forms include powders, agglomerates, granules and pellets. In a preferred embodiment, the milled composite is processed to a granule. The milled composite is extruded into pellets. When processed into a dried form, moisture may be added to the milled composite to facilitate processing. The moisture content of the final form is less than 10%. For example, the moisture content of the final form may be less than 9%, less than 8%, less than 7%, less than 6%, less than 5%, less than 4%, less than 3%, less than 2%, or less than 1%. In some embodiments, the moisture content of the freeze dried composite is about 1% to about 5%. In other embodiments, the moisture content of the freeze dried composite is about 5% to about 10%. In different embodiments, the moisture content of the freeze dried composite is about 1% to about 3%. In still different embodiments, the moisture content of the freeze dried composite is about 3% to about 6%. In alternative embodiments, the moisture content of the freeze dried composite is about 6% to about 9%. In a preferred embodiment, the milled composite is extruded into pellets and the moisture content at the end of the extrusion process is less than 7%. Methods for producing animal feed ration into powder, granules and pellets are known in the art.

In some embodiments, a dietary supplement may be added during the processing of the composition. In an embodiment, a dietary supplement may be added during steps (i) or (ii). In another embodiment, a dietary supplement may be added after step (iii) prior to step (iv). For example, a dietary supplement may be added to a milled composite prior to processing into a final form. In an embodiment where a dietary supplement is added to a milled composite, the dietary supplement may be dehydrated. The dehydration of the dietary supplement may enable homogenous distribution of the dietary supplement and the milled composite. In a preferred embodiment, a dietary supplement may be added to a milled composite that has been processed into a dried from. In other preferred embodiments, a dietary supplement may be added to a milled composite that has been processed into a powder. The milled composite comprising the dietary supplement may then be processed to a pellet. In an embodiment where a dietary supplement is added to a milled composite that has been processed into a powder, the dietary supplement may be dehydrated and of an equivalent particle size to the particles of the powder. The milled composite comprising the dietary supplement may then be processed to a pellet.

### METHODS

Also disclosed herein i but not pertaining to the invention s a method to determine the effect of at least one dietary supplement on a subject. More specifically, the method is to determine the effect of at least one dietary supplement on a gut microbiota of a subject. The method generally comprises evaluating the subject before and after consumption of at least one dietary supplement, wherein the presence or absence of a difference in the subject represents the effect of the dietary supplement on the subject. More specifically, the method generally comprises evaluating the gut microbiota of a subject before and after consumption of at least one dietary supplement, wherein the presence or absence of a difference in the gut microbiota represents the effect of the dietary supplement on the gut microbiota of the subject.

For example, the method may comprise administering or feeding a composition of the invention comprising at least one dietary supplement to a subject and determining the presence or absence of a difference in the subject after administering or feeding the composition comprising the dietary supplement(s), wherein the presence or absence of a difference in the subject represents the effect of the dietary supplement(s) on the subject. Alternatively, the method may comprise (1) administering or feeding a first composition of the invention to a subject for a first period of time, (2) administering or feeding a second composition to the subject for a second period of time, wherein the second composition consists of the first composition and at least one dietary supplement, and (3) determining the presence or absence of a difference in the subject after administering or feeding the second composition, wherein the presence or absence of a difference in the subject represents the effect of the dietary supplement on the subject. In another alternative, the method may comprise (1) administering or feeding a first composition to a subject for a first period of time, wherein the first composition is a composition of the invention further comprising at least one dietary supplement, (2) administering or feeding a second composition to the subject for a second period of time, wherein the second composition consists of the first composition without the at least one dietary supplement, and (3) determining the presence or absence of a difference in the subject after administering or feeding the second composition, wherein the presence or absence of a difference in the subject represents the effect of the dietary supplement on the subject. As a non-limiting example, the method may comprise comparing the gut microbiota of the subject before and after administration or feeding of the two compositions to determining the presence or absence of a difference, wherein the presence or absence of a difference represents the effect of the dietary supplement(s) on the subject.

Alternatively, the method may comprise (1) administering or feeding to a first subject or first group of subjects a composition comprising at least one dietary supplement and administering or feeding to a second subject or second group of subjects the same composition without said dietary supplement(s), (2) comparing the first subject or groups of subjects to the second subject or group of subjects, and (3) determining the presence or absence of a difference between the first and second subjects or group of subjects, wherein the presence or absence of a difference represents the effect of the dietary supplement(s) on the subject or group of subjects. As a non-limiting example, the method may comprise comparing the gut microbiota of the first subject or groups of subjects to the second subject or group of subjects and determining the presence or absence of a difference between the first and second subjects or group of subjects, wherein the presence or absence of a difference represents the effect of the dietary supplement(s) on the subject.

The effect of one dietary supplement, or a combination of more than one dietary supplement (e.g. 2, 3, 4, 5, 6, 7, 8, 9, 10 or more supplements), on a subject may be determined by quantifying any measurable change in a subject. Without wishing to be bound by theory, the effect of one or more dietary supplements on a subject may be determined by measuring a change in gut microbiota, a change in weight, a change in body fat, a change in energy consumption, a change in health, a change in inflammation, a change in immune function, a change in metabolism, or a combination thereof. Non-limiting examples of indicators of health may include low birth weight, obesity, arthritis, diabetes, asthma, allergies, high blood pressure, autoimmune disease, heart disease, respiratory disease, cancer incidence, disease resistance, disease susceptibility, pathogen shedding, chronic pain, depression, hospital visits due to injury, foodborne illnesses, mood, mental health, smoking habits, alcohol consumption, physical exercise habits, and breastfeeding. Methods of measuring indicators of health are known in the art. Further, methods of measuring energy consumption, weight, body fat, inflammation, immune function and metabolism are known in the art. Inflammation or an inflammatory response is achieved by increased movement of plasma and leukocytes from the blood to the region of interest. Inflammation may be acute or chronic. Signs of acute inflammation may include, but are not limited to, pain, heat, redness, swelling, and loss of function. Signs of chronic inflammation may include, but are not limited to, allergies, hay fever, asthma, periodontitis, atherosclerosis, rheumatoid arthritis and cancer. As such, a change in inflammation may be a change in one or more signs of acute inflammation or a change in one or more signs of chronic inflammation. Alternatively, inflammation may be measured by erythrocyte sedimentation rate or C-reactive protein. Other methods of measuring inflammation are known in the art and may also be used. Immune function refers to the functioning of the immune system. The immune system protects against disease. Disorders of the immune system may result in autoimmune disease, inflammatory diseases and cancer. As such, a change in immune function may be measured as a change in susceptibility to disease or a change in the signs or symptoms associated with disorders of the immune system. Alternatively, immune function may be measure by quantitation of cell-mediated immunity. Other methods of measuring immune function are known in the art and may also be used. Metabolism is enzyme-catalyzed reactions that allow organisms to grow and reproduce, maintain their structures, and respond to their environments. Metabolism may include digestion and the transport of substances into and between different cells. Metabolism may be measured as a metabolic rate. Metabolic rate is the rate of energy expenditure by a subject. As such, a change in metabolism may be measured by a change in digestion, a change in metabolic rate, a change in energy consumption, or a change in energy expenditure. Alternatively, other methods of measuring metabolism are known in the art and may be used.

The effect of a dietary supplement on a gut microbiota may be measured as change in relative and/or absolute abundance of microbes at any taxonomic level, a change in phylotypic composition, a change in expression of nucleic acids or nucleic acid products, or a change in metabolite profile. Methods to determine the relative or absolute abundance of microbes are known in the art and may include culturing or sequencing. The term "phylotypic composition," as used herein, refers to the composition of a gut microbiota as defined by phylotypes. A phylotype is a biological type that classifies an organism by its phylogenetic, e.g. evolutionary, relationship to other organisms. The term phylotype is taxon-neutral, and therefore, may refer to the species composition, genus composition, class composition, etc. Methods to determine expression of nucleic acids are known in the art and may include northern blot, PCR, RT-PCR, qRT-PCR, array, or microarray. Methods to determine expression of nucleic acid products are known in the art and may include western blot, array, microarray, antibody- or epitope binding agent-based methods, mass spectrometry, or peptide sequencing. Methods of measuring a change in metabolite profile are also known in the art and are common in the field of metabolomics.

As used herein, "change" means more than about 30, 29, 28, 27, 26, 25, 24, 23, 22, 21, 20, 19, 18, 17, 16, 15, 14, 13, 12, 11, 10, 9, 8, 7, 6, 5, 4, 3, 2, or 1% difference between the subject before and after consumption of the dietary supplement. Alternatively, "change" means more than about 30, 29, 28, 27, 26, 25, 24, 23, 22, 21, 20, 19, 18, 17, 16, 15, 14, 13, 12, 11, 10, 9, 8, 7, 6, 5, 4, 3, 2, or 1% difference between the subject consuming the dietary supplement compared to the subject not consuming the dietary supplement. A change may be positive or negative (e.g. increase or decrease).

In the embodiments above, a subject may be a laboratory animal. Non-limiting examples of a laboratory animal may include rodents, canines, felines, and non-human primates. In some embodiments, the animal is a mouse. In other embodiments, the animal is a rat. In still other embodiments, the animal is a guinea pig. In yet other embodiments, the animal is a hamster. The effect of the dietary supplement on a subject may be used as a surrogate to determine the effect of a dietary supplement on a human.

**TABLE A. USDA Food and Nutrient Database for Dietary Studies Food Coding Scheme (The USDA Food and Nutrient Database for Dietary Studies, 4.1-Documentation and User Guide (2010) Beltsville, MD: U.S. Department of Agriculture, Agricultural Research Service, Food Surveys Research Group)**

| **DESCRIPTION** | **FOOD CODE (1^{st} four digits)** |
|---|---|
| Milk and Milk Products | 1XXX |
| Milks and milk drinks | 11XX |
| Milk, human | 110X |
| Milk, fluid (regular; filled; buttermilk; and dry reconstituted) | 111X |
| Milk, fluid, evaporated and condensed | 112X |
| Milk, fluid, imitation | 113X |
| Yogurt | 114X |
| Yogurt, baby food | 1148 |
| Flavored milk and milk drinks, fluid | 115X |
| Milk-based meal replacements, fluid | 116X |
| Infant formulas, fluid, reconstituted concentrate, reconstituted dry, and ready-to-feed (milk-based formulas; soy-based formulas; therapeutic formulas) | 117X |
| Milk, dry, and powdered mixtures with dry milk, | |
| not reconstituted | 118X |
| Creams and cream substitutes | 12XX |
| Sweet dairy cream | 121X |
| Cream substitutes | 122X |
| Sour cream | 123X |
| Milk desserts, sauces, gravies | 13XX |
| Milk desserts, frozen | 131X |
| Puddings, custards, and other milk desserts | 132X |
| Milk desserts baby food | 133X |
| White sauces and milk gravies | 134X |
| Cheeses | 14XX |
| Cheese, NS6 as to type | 140X |
| Natural cheeses | 141X |
| Cottage cheeses | 142X |
| Cream cheeses | 143X |
| Processed cheeses and cheese spreads | 144X |
| Imitation cheeses | 145X |
| Cheese mixtures | 146X |
| Cheese soups | 147X |
| Meat, Poultry, Fish, and Mixtures | 2XXX |
| Meat, NS as to type | 20XX |
| Meat, NS as to type | 200X |
| Beef | 21XX |
| Beef, NFS7 | 210X |
| Beefsteak | 211X |
| Beef oxtails, neckbones, short ribs, head | 213X |
| Beef roasts, stew meat, corned beef, beef brisket, sandwich steaks | 214X |
| Ground beef, beef patties, beef meatballs | 215X |
| Other beef items (beef bacon; dried beef; pastrami) | 216X |
| Beef baby food | 217X |
| Pork | 22XX |
| Pork, NFS; ground, dehydrated | 220X |
| Pork chops | 221X |
| Pork steaks, cutlets | 222X |
| Ham | 223X |
| Pork roasts | 224X |
| Canadian bacon | 225X |
| Bacon, salt pork | 226X |
| Other pork items (spareribs; cracklings; skin; miscellaneous parts) | 227X |
| Pork baby food | 228X |
| Lamb, veal, game, other carcass meat | 23XX |
| Lamb, NFS | 230X |
| Lamb and goat | 231X |
| Veal | 232X |
| Game | 233X |
| Lamb or veal baby food | 234X |
| Poultry | 24XX |
| Chicken (breast; leg; drumstick; wing; back; neck or ribs; misc,) | 241X |
| Turkey | 242X |
| Duck | 243X |
| Other poultry | 244X |
| Poultry baby food | 247X |
| Organ meats, sausages and lunchmeats, and meat spreads | 25XX |
| Organ meats and mixtures | 251X |
| Liver | 2511 |
| Hearts | 2512 |
| Kidney | 2513 |
| Sweetbreads | 2514 |
| Brains | 2515 |
| Tongue | 2516 |
| Other variety meats | 2517 |
| Frankfurters, sausages, lunchmeats, meat spreads | 252X |
| Frankfurters | 2521 |
| Sausages | 2522 |
| Luncheon meats (loaf) | 2523 |
| Potted meat, spreads | 2524 |
| Fish and shellfish | 26XX |
| Finfish | 261X |
| Other seafood | 262X |
| Shellfish | 263X |
| Meat, poultry, fish with nonmeat items | 27XX |
| Meat, poultry, fish in gravy or sauce or creamed | 271X |
| Beef in gravy or sauce (tomato-based sauce; gravy; cream, white, or soup-based sauce; soy-based sauce; other sauce; Puerto Rican) | 2711 |
| Pork with gravy or sauce | 2712 |
| Lamb and veal with gravy or sauce | 2713 |
| Poultry with gravy or sauce (tomato-based sauce; gravy; cream, white, or soup-based sauce; soy-based sauce; other sauces; Puerto Rican) | 2714 |
| Fish, shellfish with gravy or sauce | 2715 |
| Miscellaneous meats with gravy or sauce | 2716 |
| Meat, poultry, fish with starch item (include white potatoes) | 272X |
| Beef with starch item (potatoes; noodles; rice; bread; Puerto Rican) | 2721 |
| Pork with starch item | 2722 |
| Lamb, veal, game with starch item | 2723 |
| Poultry with starch item (potatoes; noodles; rice; bread) | 2724 |
| Fish, shellfish with starch item | 2725 |
| Miscellaneous meats with starch item | 2726 |
| Meat, poultry, fish with starch item and vegetables | 273X |
| Beef with starch and vegetable (potatoes; noodles; rice; bread; Puerto Rican) | 2731 |
| Pork with starch and vegetable | 2732 |
| Lamb, veal, game with starch and vegetable | 2733 |
| Poultry with starch and vegetable (potatoes; noodles; rice; bread; Puerto Rican) | 2734 |
| Fish, shellfish with starch and vegetable | 2735 |
| Miscellaneous meats with starch and vegetable | 2736 |
| Meat, poultry, fish with vegetables (excluding white potatoes) | 274X |
| Beef with vegetable, no potatoes | 2741 |
| Pork with vegetable, no potatoes | 2742 |
| Lamb, veal, game with vegetable, no potatoes | 2743 |
| Poultry with vegetables, no potatoes | 2744 |
| Fish, shellfish with vegetables, no potatoes | 2745 |
| Miscellaneous meats with vegetable, no potatoes | 2746 |
| Sandwiches with meat, poultry, fish | 275X |
| Beef sandwiches | 2751 |
| Pork sandwiches | 2752 |
| Poultry sandwiches | 2754 |
| Fish, shellfish sandwiches | 2755 |
| Frankfurters, luncheon meat, potted meat sandwiches | 2756 |
| Hors d'oeuvres, finger sandwiches | 2757 |
| Meat, poultry, fish with nonmeat items baby food | 276X |
| Beef mixtures baby food | 2761 |
| Poultry mixtures baby food | 2764 |
| Frozen and shelf-stable plate meals, soups, and gravies with meat, poultry, fish base; gelatin and gelatin-based drinks | 28XX |
| Frozen or shelf-stable plate meals with meat, poultry, fish as major ingredient | 281X |
| Beef frozen or shelf-stable meals | 2811 |
| Pork or ham frozen or shelf-stable meals | 2812 |
| Veal frozen or shelf-stable meals | 2813 |
| Poultry frozen or shelf-stable meals | 2814 |
| Fish, shellfish frozen meals | 2815 |
| Miscellaneous meat frozen or shelf-stable meals | 2816 |
| Soups, broths, extracts from meat, poultry, fish base | 283X |
| Beef soups | 2831 |
| Pork soups | 2832 |
| Lamb soups | 2833 |
| Poultry, soups | 2834 |
| Fish, shellfish soups | 2835 |
| Puerto Rican soups | 2836 |
| Gelatin and gelatin-based meal supplements | 284X |
| Gravies from meat, poultry, fish base | 285X |
| Eggs | 3XXX |
| Eggs | 31XX |
| Chicken eggs | 311X |
| Other poultry eggs | 312X |
| Egg mixtures | 32XX |
| Egg dishes | 321X |
| Egg sandwiches | 322X |
| Egg soups | 323X |
| Meringues | 324X |
| Egg substitutes | 33XX |
| Egg substitute, NS as to form | 330X |
| Egg substitute, from powdered mixture | 331X |
| Egg substitute, from frozen mixture | 332X |
| Egg substitute, from liquid mixture | 333X |
| Frozen plate meals with egg as major ingredient | 35XX |
| Frozen plate meals with egg as major ingredient | 350X |
| Dry Beans, Peas, Other Legumes, Nuts, and Seeds | 4XXX |
| Legumes | 41XX |
| Dried beans | 411X |
| Dried beans mixtures | 412X |
| Dried peas, lentils, and mixtures | 413X |
| Soybean derived products (excluding milks) | 414X |
| Frozen plate meals with legumes as major ingredient | 415X |
| Soups with legumes as major ingredient | 416X |
| Meat substitutes, mainly legume protein | 418X |
| Meat substitute sandwiches | 419X |
| Nuts, nut butters, and nut mixtures | 42XX |
| Nuts | 421X |
| Nut butters | 422X |
| Nut butter sandwiches | 423X |
| Coconut beverages | 424X |
| Nut mixtures | 425X |
| Seeds and seed mixtures | 43XX |
| Seeds | 431X |
| Carob products | 44XX |
| Carob powder, flour | 441X |
| Carob chips, syrup | 442X |
| Grain Products | 5XXX |
| Flour and dry mixes | 50XX |
| Flour and dry mixes | 500X |
| Yeast breads, rolls | 51XX |
| Breads, rolls, NFS | 510X |
| White breads, rolls | 511X |
| Whole wheat breads, rolls | 512X |
| Wheat, cracked wheat breads, rolls | 513X |
| Rye breads, rolls | 514X |
| Oat breads | 515X |
| Multigrain breads, rolls | 516X |
| Other breads | 518X |
| Quick breads 521 Biscuits | 52XX |
| Cornbread, corn muffins, tortillas | 522X |
| Other muffins, popovers | 523X |
| Other quick breads | 524X |
| Cakes, cookies, pies, pastries 531 Cakes | 53XX |
| Cookies | 532X |
| Pies (fruit pies; pie tarts; cream, custard, and chiffon pies; miscellaneous pies; pie shells) | 533X |
| Cobblers, eclairs, turnovers, other pastries | 534X |
| Danish, breakfast pastries, doughnuts, granola bars | 535X |
| Coffee cake, not yeast | 536X |
| Cookies and bars, baby food | 538X |
| Crackers and salty snacks from grain products | 54XX |
| Crackers, NS as to type | 540X |
| Sweet crackers | 541X |
| Low sodium crackers | 542X |
| Nonsweet crackers | 543X |
| Salty snacks from grain products | 544X |
| Pancakes, waffles, french toast, other grain products | 55XX |
| Pancakes | 551X |
| Waffles | 552X |
| French toast | 553X |
| Crepes | 554X |
| Flour-water patties | 555X |
| Flour-milk patties | 556X |
| Rice flour cakes | 557X |
| Funnel cakes | 558X |
| Pastas, cooked cereals | 56XX |
| Pastas | 561X |
| Cooked cereals, rice | 562X |
| Cereals, not cooked or NS as to cooked | 57XX |
| Cereal, NS as to cooked | 570X |
| Ready-to-eat cereals | 571X |
| Ready-to-eat cereals | 572X |
| Ready-to-eat cereals | 573X |
| Ready-to-eat cereals | 574X |
| Cereal grains, not cooked | 576X |
| Cereals baby food | 578X |
| Grain mixtures, frozen plate meals, soups | 58XX |
| Mixtures, mainly grain, pasta, or bread | 581X |
| Mixtures, mainly grain, pasta, or bread | 582X |
| Frozen plate meals with grain mixture as major ingredient | 583X |
| Soups with grain product as major ingredient | 584X |
| Grain mixtures baby food | 585X |
| Meat substitutes, mainly cereal protein | 59XX |
| Meat substitutes, mainly cereal protein | 590X |
| Fruits | 6XXX |
| Citrus fruits, juices | 61XX |
| Citrus fruits | 611X |
| Citrus fruit juices | 612X |
| Dried fruits | 62XX |
| Dried fruits | 621X |
| Other fruits | 63XX |
| Fruits, excluding berries | 631X |
| Berries | 632X |
| Mixtures of two or more fruits | 633X |
| Mixtures of fruits and nonfruit items | 634X |
| Fruit juices and nectars excluding citrus | 64XX |
| Fruit juices, excluding citrus | 641X |
| Nectars | 642X |
| Vinegar | 644X |
| Fruits and juices baby food | 67XX |
| Fruits and fruit mixtures baby food | 671X |
| Fruit juice and fruit juice mixtures baby food | 672X |
| Fruits with cereal baby food | 673X |
| Fruit desserts and fruit-flavored puddings and yogurt desserts baby food | 674X |
| Fruits with meat or poultry baby food | 675X |
| Fruits and vegetables mixtures baby food | 676X |
| Vegetables | 7XXX |
| White potatoes and Puerto Rican starchy vegetables | 71XX |
| White potatoes, NFS | 710X |
| White potatoes, baked and boiled | 711X |
| White potatoes, chips and sticks | 712X |
| White potatoes, creamed, scalloped, au gratin 714 | |
| White potatoes, fried | 713X |
| White potatoes, fried | 714X |
| White potatoes, mashed, stuffed, puffs | 715X |
| Potato salad | 716X |
| Potato recipes | 717X |
| Potato soups | 718X |
| Puerto Rican starchy vegetables | 719X |
| Dark-green vegetables | 72XX |
| Dark-green leafy vegetables | 721X |
| Dark-green nonleafy vegetables | 722X |
| Dark-green vegetable soups | 723X |
| Deep-yellow vegetables | 73XX |
| Carrots | 731X |
| Pumpkin | 732X |
| Squash, winter | 733X |
| Sweet potatoes | 734X |
| Deep-yellow vegetable soups | 735X |
| Tomatoes and tomato mixtures | 74XX |
| Tomatoes, raw | 741X |
| Tomatoes, cooked | 742X |
| Tomato juices | 743X |
| Tomato sauces | 744X |
| Tomato mixtures | 745X |
| Tomato soups | 746X |
| Tomato sandwiches | 747X |
| Other vegetables | 75XX |
| Other vegetables, raw | 751X |
| Raw vegetable mixtures | 7514 |
| Other vegetables, cooked | 752X |
| Other vegetable mixtures, cooked | 753X |
| Other cooked vegetables, cooked with sauces, batters, casseroles | 754X |
| Olives, pickles, relishes (excluding tomatoes) | 755X |
| Vegetable soups | 756X |
| Vegetables and mixtures mostly vegetables baby food | 76XX |
| Dark-green vegetables baby food | 761X |
| Deep-yellow vegetables baby food | 762X |
| Vegetables other than dark-green, deep-yellow, and tomato baby food | 764X |
| Vegetables with grain baby food | 765X |
| Vegetables with meat baby food | 766X |
| Vegetables with meat, poultry, fish | 77XX |
| White potato with meat, poultry, fish (mixtures) | 771X |
| Puerto Rican starchy vegetable (viandas) mixtures | 772X |
| Other vegetable mixtures | 773X |
| Puerto Rican stews or soups with starchy vegetables (viandas) | 775X |
| Mixtures mostly vegetables without meat, poultry, fish | 78XX |
| Vegetable and fruit juice blends, 100% juice | 781X |
| Fats, Oils, and Salad Dressings | 8XXX |
| Fats | 81XX |
| Table fats | 811X |
| Cooking fats | 812X |
| Other fats | 813X |
| Oils | 82XX |
| Vegetable oils | 821X |
| Salad dressings | 83XX |
| Regular salad dressings | 831X |
| Low-calorie and reduced calorie salad dressings | 832X |
| Sugars, Sweets, and Beverages | 9XXX |
| Sugars and sweets | 91XX |
| Sugars and sugar-sugar substitute blends | 911X |
| Sugar replacements or substitute | 912X |
| Syrups, honey, molasses, sweet toppings | 913X |
| Jellies, jams, preserves | 914X |
| Gelatin desserts or salads | 915X |
| Ices or popsicles | 916X |
| Candies | 917X |
| Chewing gums | 918X |
| Nonalcoholic beverages | 92XX |
| Coffee | 921X |
| Coffee substitutes | 922X |
| Tea | 923X |
| Soft drinks, carbonated | 924X |
| Fruit drinks | 925X |
| Fruit juice drinks and fruit flavored drinks | 9251 |
| Group Discontinued as of 12/31/2004; previously described as "Fruitades and drinks, low calorie, NS as to vitamin C content" | 9252 |
| Fruit juice drinks and fruit flavored drinks with high vitamin C | 9253 |
| Fruit flavored drinks, made from powdered mix | 9254 |
| Fruit juice drinks and fruit flavored drinks, low calorie | 9255 |
| Sports drinks and thirst quencher beverages | 9256 |
| Beverages, fluid replacement | 9257 |
| Fruit juice drinks and fruit flavored drinks, fortified with calcium | 9258 |
| Beverages, nonfruit | 926X |
| Beverages, nonfruit, fortified (include energy drinks) | 9265 |
| Group Discontinued as of 12/31/2004; previously described as "Beverages, noncarbonated, without vitamin C, made from powdered mixes" | 927X |
| Nonalcoholic beers, wines, cocktails | 928X |
| Beverage concentrates, dry, not reconstituted | 929X |
| Alcoholic beverages | 93XX |
| Beers and ales | 931X |
| Cordials and liqueurs | 932X |
| Cocktails | 933X |
| Wines | 934X |
| Distilled liquors | 935X |
| Water, noncarbonated 940 Water, not bottled | 94XX |
| Water, bottled | 941X |
| Water, bottled, fortified | 942X |

| | |
|---|---|
| Note: X represents a place holder, and may be any digit from 1-9. | |

### EXAMPLES

### Example 1. Development of Human Food-Based Diets, Based on Two "Typical" U.S. Adult Diets Differing in Saturated Fat and Fruit/Vegetable Consumption

Dietary recalls collected on Day 1 of the National Health and Nutrition Examination Surveys (NHANES) administered in 2003-2004, 2005-2006 and 2007-2008 were used: 1) to identify healthy, non-pregnant, non-lactating American adults, aged 20-65 yrs, who are highly differentiated relative to two aspects of dietary guidance, specifically saturated fat and fruit and vegetable intakes, and 2) to characterize key foods in the diets for these two populations. The two subpopulations identified within the larger dataset are HiSF-LoFV and LoSF-HiFV (**Table 1**). The HiSF-LoFV (High Saturated Fat, Low Fruit and Vegetable) group included individuals in the highest tertile of saturated fat and lowest tertile of fruit and vegetable intakes. In contrast, the LoSF-HiFV group included individuals in the lowest tertile of saturated fat and highest tertile of fruit and vegetable intakes. Key characterizing foods consumed by the HiSF-LoFV and LoSF-HiFV subpopulations were then identified in a two-step process using eight broad food groups and 63 food subgroups expressed on a kcal food/1000 kcal total diet basis (**Table 2**). A detailed description of the methodology is provided below.

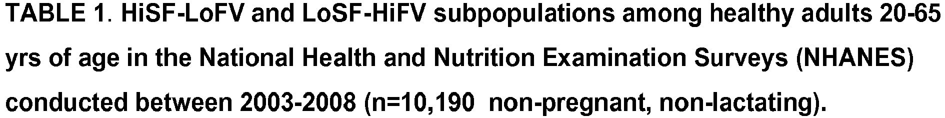

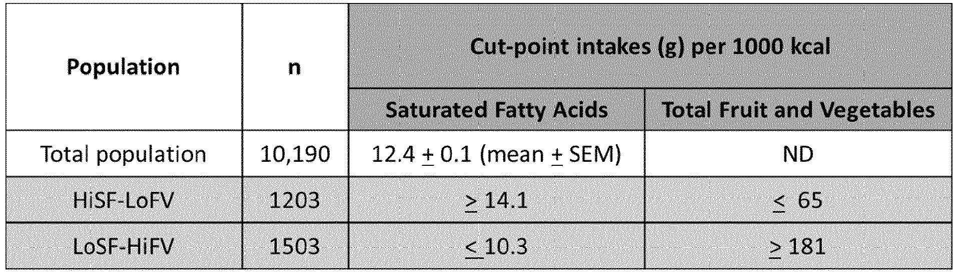

**TABLE 2. Characterizing foods consumed by the HiSF-LoFV (A) and LoSF-HiFV (B) subpopulations.**

| **(A) HiSF-LoFV characterizing foods** | | |
|---|---|---|
| **Key Food Group/Food Name (Food Code)** | **kcal/1000 kcal total diet** | **% weight** |
| **Milk & Milk Products** | | |
| Milk, cow's fluid, 2% fat (11112110) | 49 | 13.9 |
| - Ice cream, regular, flavors other than chocolate (13110100) | 40 | 2.7 |
| - Cheese, processed, American or Cheddar (14410200) | 54 | 2.3 |

| **Meat, poultry, Fish; Eggs; Nuts and Seeds; Legumes** | | |
|---|---|---|
| - Ground beef or patty, cooked (21500100) | 41 | 2.2 |
| - Ham, sliced, prepackage or deli, luncheon meat (25230210) | 59 | 5.9 |
| - Cheeseburger (2 patties), with tomato/catsup, bun (27510330) | 131 | 7.3 |
| - Eggs, whole, fried (31105000) | 37 | 2.6 |

| **Grain Products** | | |
|---|---|---|
| - Roll, white soft (51150000) | 64 | 3.3 |
| - Tortilla, wheat (52215200) | 26 | 1.2 |
| - Cookie, chocolate chip (53206000) | 58 | 1.7 |
| - Tortilla chips (54401080) | 33 | 0.9 |
| - Pizza with meat, thin crust (58106520) | 193 | 9.2 |

| **Fruits** | | |
|---|---|---|
| | | |

| **Vegetables** | | |
|---|---|---|
| - White potato, chips (71201010) | 32 | 0.8 |

| **Fats and Oils** | | |
|---|---|---|
| Mayonnaise, regular (83107000) | 29 | 0.6 |

| **Sugars and Sweets** | | |
|---|---|---|
| Milk chocolate candy, plain (91705010) | 46 | 1.2 |

| **Beverages** | | |
|---|---|---|
| -Beer, lite (9310200) | 20 | 9.9 |
| - Fruit flavored drink, powdered mix (92541010) | 18 | 7.2 |
| - Soft drink, cola type (92410310) | 71 | 27.1 |
| **Total Characterizing Diet (18 foods)** | 1,000 | 100 |

| **(B) LoSF-HiFV characterizing foods** | | |
|---|---|---|
| **Key Food Group/Food Name (Food Code)** | **kcal/1000 kcal total diet** | **% weight** |
| **Milk & Milk Products** | | |
| - Milk, cow's, fluid, skim or nonfat, 0.5% or less butterfat (11113000) | 35 | 9.2 |
| - Ice cream, regular, flavors otherthan chocolate (13110100) | 14 | 0.6 |
| - Cheese, processed, American or Cheddar (14410200) | 15 | 0.4 |

| **Meat poultry, Fish; Eggs; Nuts and Seeds; Legumes** | | |
|---|---|---|
| - Chicken, breast, roasted, broiled or baked (24122120) | 54 | 3.0 |
| - Tuna salad (27450060) | 93 | 4.5 |
| - Egg omelet or scrambled egg (32105000) | 20 | 1.1 |
| - Peanut butter (42202000) | 35 | 0.5 |
| - Milk, soy, ready to drink (11320000) | 32 | 6.6 |

| **Grain Products** | | |
|---|---|---|
| - Roll, white soft (51150000) | 76 | 2.4 |
| - Cheerios (57123000) | 28 | 0.7 |
| - Rice, white, cooked (5605010) | 35 | 2.4 |
| -Tortilla, corn (52215100) | 36 | 1.5 |
| - Cookie, chocolate (53209000) | 54 | 1.0 |
| - Tortilla chips, corn (54401080) | 32 | 0.6 |
| - Spaghetti with tomato sauce (58132110) | 61 | 4.1 |

| **Fruits** | | |
|---|---|---|
| -Orange juice (61210220) | 39 | 7.2 |
| - Apple, raw (63101000) | 15 | 2.7 |
| - Banana, raw (63107010) | 22 | 2.2 |
| - Grapes, raw (63123000) | 24 | 3.2 |
| - Apple juice (64104010) | 22 | 4.2 |

| **Vegetables** | | |
|---|---|---|
| - White potato, chips (71201010) | 27 | 0.4 |
| - White potato, mashed (71501000) | 24 | 2.3 |
| - Tomatoes, raw (75113000) | 11 | 5.5 |
| - Lettuce, raw (75113000) | 4 | 2.3 |
| - Onion, raw (75117020) | 33 | 7.5 |

| **Fats and Oils** | | |
|---|---|---|
| - Italian dressing, vinegar and oil (83106000) | 29 | 0.9 |

| **Sugars and Sweets** | | |
|---|---|---|
| - Hard candy (91745020) | 27 | 0.6 |

| **Beverages** | | |
|---|---|---|
| - Beer (93101000) | 33 | 6.8 |
| - Fruit flavored drink (92511010) | 26 | 4.8 |
| - Soft drink, cola type (92410310) | 44 | 10.6 |
| **Total Characterizing Diet (30 foods)** | 1,000 | 100 |

*Data Source and Sample* NHANES utilizes in-person, 24-hr dietary recalls using an automated, multiple-pass method. This method guides the respondent through the dietary intake period more than once and consequently provides multiple opportunities to identify foods and specific details about the foods consumed during the recall period (Raper et al. J Food Compos Anal 2004; 17(3-4): 545-555). Diet recalls were analyzed by the United States Department of Agriculture (USDA) Food Surveys Research Group (FSRG) to estimate the types and amounts of foods, as well as their nutrient composition, consumed by each respondent (CDC 2007, 2008, 2010). Additional information on foods reported by NHANES respondents in 24-hour recalls has been provided by USDA-FSRG in their Food and Nutrition Database for Dietary Studies (FNDDS); FNDDS data include a food coding scheme, "recipes" used in deriving nutrient composition data, and additional detail on foods categorized by specific food codes. USDA-FSRG has developed a grouping scheme for the survey food codes to aid in reporting food intake estimates. In the USDA-defined food grouping system, NHANES food codes (excluding plain water) are typically grouped into 71 food groups or subgroups.

Selected data from NHANES Food Frequency Questionnaires (FFQs) administered in 2003-2004 and 2005-2006 were also used in the analyses in order to collect additional information regarding frequency of consumption of caloric beverages. The FFQ, developed by the National Cancer Institute (NCI), is based on the NCI Diet History Questionnaire, a 124-item food frequency instrument that is widely used in nutritional epidemiology research (Subar et al. Am J Epidemiol 2001; 154:1089-99).

*Food Categories* The 71 USDA-defined food groups and subgroups represent hierarchical groupings of food codes within broad food categories, and consequently the USDA hierarchy provides a food coding scheme that can be used to identify key characterizing foods within groups of similar foods. This food grouping scheme was used to identify key foods consumed by the HiSF-LoFV and LoSF-HiFV subpopulations. In the analyses, the Meat, Poultry and Fish; Eggs; Nuts and Seeds; and Legumes groups were combined into one major food group. The total fluid milk subgroup was used to assess all fluid milk intake and separate subgroups for "total fruit juice drinks and fruit flavored drinks" and "total carbonated soft drinks" were used to assess total intakes of these beverages. After modification, the food grouping system included 63 food subgroups within eight broad food groups.

*Subpopulations Based on Saturated Fat and Total Fruit and Vegetable Consumption* Among the total sample (n=10, 190), tertiles were determined based on g saturated fat/1000 kcal and g fruit+vegetable/1000 kcal (NHANES food codes starting with 6 for fruit and 7 for vegetables), with >14.1 g saturated fat/1000 kcal and <10.3 g saturated fat/1000 kcal defining the top and bottom tertiles, respectively. For combined fruit and vegetable intakes, ≤ 65 g fruits + vegetables/1000 kcal defined the lowest tertile and >181 g fruits + vegetables/1000 kcal defined the top tertile. Using these tertile cutpoints, 11.8% of individuals were in the HiSF-LoFV group (n=1203) and 14.7% were in Low Saturated Fat, High Fruit and Vegetable (LoSF-HiFV) group (n=1503).

*Foods that Characterize HiSF-LoFV and LoSF-HiFV Diets* Key characterizing foods consumed by the HiSF-LoFV and LoSF-HiFV subpopulations were identified in a two-step process using eight broad food groups and 63 food subgroups expressed on a kcal food/1000 kcal total diet basis.

In the first step, key food subcategories were identified. Relative energy intakes by major food group and food subgroup, and the proportion of the subpopulation consuming foods within individual food subgroups were used to identify the key food subgroups consumed by the HiSF-LoFV subpopulation, and separately by the LoSF-HiFV subpopulation. The specific criteria used were as follows:

• Food subgroups providing less than 20 kcal/1000 kcal total diet (i.e., less than 2.0% of energy) were excluded from consideration.

• Within each food subgroup providing from 20 to 50 kcal/1000 kcal total diet (i.e., 2.0 to 5.0% of energy), the single food subgroup representing the largest source of energy was selected as a key food subgroup.

• Within each food group providing more than 50 kcal/1000 kcal total diet (i.e., over 5.0% of total energy), all food subgroups meeting at least one of the following two criteria were considered key food subgroups: 1) Contributing at least 10% of kcal per 1000 kcal for the food group AND consumed by at least 10% of the subpopulation; 2) Consumed by 20% or more of the subpopulation.

Coffee and tea were excluded because mice are sensitive to caffeine and because these beverages contribute little to energy intake.

In the second step, food(s) that best characterized each identified key food group/subgroup were selected. For each identified key food group/subgroup, the food code with the highest weight of food consumed per 1000 kcal in the subpopulation reporting consumption on the day of recall was selected to be the key food characterizing that entire food group/subgroup.

*Proportions of Key Foods in HiSF-LoFV and LoSF-HiFV Diets* The proportions of key foods to be included in mouse diets (wet weight) were calculated by first determining the relative energy contributions from key food subgroups to the total energy intake from the USDA-based food group (per 1000 kcal total diet) and then determining the weight of the food (in g) required to deliver the calculated energy contribution from the relevant food group per 1000 kcal total diet **(Table 1).** Once the characterizing foods were identified for the two diets, calculated nutrient intakes were compared to 24 hr recall data as an indicator of how well the characterizing foods reflect reported intakes. Results indicated that cholesterol was low in the LoSF-HiFV diet and therefore egg was added to the LoSF-HiFV diet. **Table 3** shows that mean nutrient content of animal chow made from key characterizing foods were similar to intakes reported from the 24-h recall for both the resulting HiSF-LoFV and LoSF-HiFV diets.

**TABLE 3. Comparison of nutrient content per 1000 kcal from intake based on a 24-hour diet recall (24 hr Recall); calculated diet based on key characterizing foods (Calculated Diet); or chemical analysis of the Animal Chow (Animal Chow).**

| | **HiSF-LoFV** | | | **LoSF-HiFV** | | |
|---|---|---|---|---|---|---|
| **Nutrient per 1000 kcal** | **24 hr Recall** | **Calculated Diet** | **Animal Chow** | **24 hr Recall** | **Calculated Diet** | **Animal Chow** |
| Protein, g | 39.9 | 42.0 | 45.8 | 41.0 | 38.9 | 38.3 |
| Total Fat, g | 45.3 | 47.0 | 47.2 | 28.6 | 28.0 | 33.2 |
| Total Saturated Fat, g | 17.6 | 18.6 | 17.7 | 7.6 | 6.5 | 7.0 |
| Total Monounsaturated Fat, g | 16.4 | 16.4 | 13.6 | 10.5 | 9.0 | 12.8 |
| Total Polyunsaturated Fat, g | 7.4 | 7.7 | 8.5 | 7.7 | 10.0 | 9.3 |
| Cholesterol, mg | 163 | 191 | 179 | 109 | 91 | 84 |
| Carbohydrate, g | 105 | 99 | 97 | 142 | 148 | 139 |
| Total Sugars, g | 48 | 47 | 50 | 66 | 72 | 71 |
| Dietary Fiber, g | 5.1 | 3.5 | 5.7 | 11.0 | 9.8 | 13.7 |
| Vitamin A, mcg RAE | 252 | 201 | 188 | 385 | 286 | 370 |
| Vitamin E, mg alpha-toc | 2.7 | 2.5 | 0.7 | 1.1 | 0.9 | 0.7 |
| Vitamin C, mg | 14.3 | 10.4 | 8.0 | 88.5 | 61 | 23 |
| Thiamin, mg | 0.7 | 0.8 | 0.9 | 0.9 | 0.7 | 0.8 |
| Riboflavin, mg | 1.1 | 0.9 | 0.7 | 1.1 | 0.9 | 0.7 |
| Niacin, mg | 10.2 | 8.9 | 11.4 | 14.3 | 16.1 | 14 |
| Folate, mcg DFE | 211 | 169 | 131 | 331 | 334 | 250 |
| Vitamin B6, mg | 0.7 | 0.6 | 0.4 | 1.3 | 1.2 | 0.9 |
| Vitamin B12, mcg | 2.6 | 2.8 | 2.8 | 2.4 | 2.9 | 3.3 |
| Calcium, mg | 480 | 523 | 601 | 418 | 439 | 500 |
| Phosphorus, mg | 652 | 672 | 764 | 647 | 613 | 617 |
| Magnesium, mg | 113 | 90 | 99 | 171 | 158 | 161 |
| Iron, mg | 6.5 | 5.9 | 8.8 | 8.7 | 8.1 | 8.4 |
| Zinc, mg | 6.0 | 6.2 | 6.6 | 5.8 | 4.5 | 5.1 |
| Copper, mg | 0.5 | 0.5 | 0.5 | 0.8 | 0.7 | 0.8 |
| Selenium, mcg | 52 | 54 | 101 | 55 | 61 | 100 |
| Sodium, mg | 1676 | 1975 | 2021 | 1621 | 1279 | 804 |
| Potassium, mg | 1076 | 899 | 821 | 1704 | 1581 | 1550 |

### Example 2. Preparing and Processing Animal Chow

Characterizing foods were processed into dried animal chow pellets using methods to achieve an even mix of foods in quantitative proportions and to retain nutrients. The approach of blending all the diverse food items into one mixture and freeze drying the resulting mixture was experimental. Due to the unique nature of this mixture it was unknown if the freeze dried material would have the correct physicochemical characteristics to be extruded/molded into a structurally stable granular or pellet form. The blending of all the food items that represent a diet into a homogeneous mixture distributed the water, fat, oil and low molecular weight solutes (sugars and minerals) into an emulsion and suspension that was amiable to freezing and freeze drying. It is hypothesized that the freezing point of the blended mix was raised compared to some of the individual food items, making the homogenous composite a feasible approach to freeze drying food items that have a much lower freezing points and difficult to freeze dry. Food items with low freezing points and potentially more difficult to freeze dry would be those high in simple sugars, salt and fat (e.g. salad dressing, chocolate, candy). The distribution of the water in this complex food matrix was such that when removed via the freeze drying process the resulting dry powder had the correct characteristics for extrusion and molding into an appropriate form.

Homogenous food composites for the two diets were prepared as follows. Characterized foods for each diet were purchased from Chicago area stores and/or prepared using standard recipes from the USDA FNDDS or from standard authoritative cookbooks. Mixed dishes (e.g. pizza) were produced over a one week timeframe, weighed into batches, and then frozen until they were thawed prior to compositing. Perishable foods were prepared (e.g., peeled, cored), weighed out the day before blending and stored refrigerated or at room temperature as appropriate. To composite the diets, foods were added in quantitative proportions into a Breddo Likwifer mixer (model LOR 25) and recirculated through a Silverson high energy mixer until evenly blended by visual inspection in single batches to ensure a homogeneous mixture (**Tables 4** and **5**). Homogenized mixtures were collected in 5 gallon pails and then frozen at -20°C. **FIG. 1** illustrates the flow of diet manufacture.

Homogenous composite formulas were maintained at -20°C. Frozen blocks of each composite diet were finely shredded and then placed in a vacuum chamber set at 1 mb until available moisture was removed (approximately 27 hours). Freeze dried material was then milled to a 20 mesh size and packed into 18.14 kg (40 lb) bags (stored at room temperature). Water was added to the freeze dried formula to reach an acceptable visual viscosity for extrusion into pellets. Samples were collected from the beginning, middle and end of the extrusion process for compositional analysis based on AOAC methodology. The averages of those data are shown in **Table 3** and **Table 6.** Pellets were flushed with nitrogen and vacuum packed. Vacuum packed diets were sterilized via gamma irradiation.

*Recipes*: Reference numbers for the following recipes were from the USDA Food and Nutrient Database for Dietary Studies, 4.1.2010.Beltsville, MD; U.S. Department of Agriculture, Agriculture Research Service, Food Surveys Research Group; and USDA Food and Nutrient Database for Dietary Studies, 3.0.2008. Beltsville, MD; U.S. Department of Agriculture, Agriculture Research Service, Food Surveys Research Group (FNDDS3.0 data used only for Pizza). Pizza, thin crust meat: 58106520, recipe slightly modified, used premade crust and substituted tomato sauce for tomato juice and puree; Double Cheeseburger: 27510330; Egg fried: 31105000; Tuna Salad: 27450060; Spaghetti with tomato sauce: 58132110; White Rice: 56205010; Mashed Potato: 71501000; Scrambled Egg: 32105000; Baked Chicken breast: 24122120; Italian Dressing recipe from Joy of Cooking (1975; 23rd printing 1981).

**TABLE 4. High Saturated Fat Low Fruit Vegetable Processing Protocol**

| **High Saturated Fat Low Fruit and Vegetable Diet** | | | |
|---|---|---|---|
| **Food Type** | **Order Added to Breddo** | **Process Adjustment** | **Comments** |
| Soft Drink | 1 | Recirculation Off | Breddo at 600rpm split amount by half added second half after ground beef patty addition |
| Fruit Drink from powder | 2 | | |
| Corn Snack | 3 | | |
| Potato Chip | 4 | | |
| White Roll soft | 5 | | |
| Lite Beer | 6 | | |
| Chocolate Chip Cookie | 7 | | |
| Flour Tortilla | 8 | Pulse | Pulse Breddo at 2200 rpm for a few minutes |
| Milk Chocolate Candy | 9 | | |
| Processed Cheese American | 10 | Pulse | Pulse Breddo at 2200 rpm for a few minutes |
| | | Pulse, Recirculation | Pulse Breddo at 2200 rpm for a few minutes, Recirculation started with Silversonmixer run |
| Ham sliced | 11 | On | at 3500rpm |
| Double Cheeseburger w/ tomato on bun | 12 | Pulse | Pulse Breddo at 2200 rpm for a few minutes |
| Egg Fried | 13 | | |
| Ground Beef Patty | 14 | | |
| Mayonnaise | 15 | | |
| Pizza, thin crust meat | 16 | Pulse | Pulse Breddo at 2200 rpm for a few minutes |
| Ice Cream | 17 | | |
| Milk 2% | 18 | | |
| | | | Mix for approximately 5 minutes before collecting mixture |

**TABLE 5. Low Saturated Fat High Fruit Vegetable Diet Processing Protocol**

| **Low Saturated Fat High Fruit and Vegetable Diet** | | | |
|---|---|---|---|
| **Food Type** | **Order Added to Breddo** | **Process Adjustment** | **Comments** |
| Soft drink | 1 | Recirculation Off | Breddo at 600rpm |
| Hard Candy | 2 | | |
| Cheese, Cheddar | 3 | | |
| Chicken Breast baked no skin | 4 | | |
| Potato Chips | 5 | | |
| Corn Snack | 6 | | |
| Ready to Eat Cereal | 7 | | Increase Breddo Speed to approx 1,100 |
| Orange Juice | 8 | | |
| Raw Onion | 9 | Pulse | Pulse Breddo at 2200 rpm for a few minutes |
| Raw Banana | 10 | | |
| Raw Lettuce | 11 | Pulse | Pulse Breddo at 2200 rpm for a few minutes |
| Raw Tomato | 12 | | |
| Raw Grapes | 13 | | |
| Raw Apple | 14 | Pulse | Pulse Breddo at 2200 rpm for a few minutes |
| Peanut Butter | 15 | | |
| Chocolate cookie | 16 | | |
| Corn Tortilla | 17 | Pulse | Pulse Breddo at 2200 rpm for a few minutes |
| Mashed Potatoes | 18 | | |
| White Rice | 19 | Pulse | Pulse Breddo at 2200 rpm for a few minutes |
| Spaghetti with Tomato Sauce | 20 | | |
| Scrambled Egg fat added in cooking | 21 | Recirculation On | Recirculation started with Silversonmixer run at 3500rpm |
| Roll White Soft | 22 | Pulse | Pulse Breddo at 2200 rpm for a few minutes |
| Apple Juice | 23 | | |
| Ice Cream | 24 | | |
| Milk Skim | 25 | | |
| Soy Milk | 26 | | |
| Beer | 27 | | |
| Lemonade | 28 | | Powdered Lemonade added to italian dressing |
| Italian Dressing vinegar and oil | 28 | | |
| Tuna Salad* | 29 | | *Stephan processing |
| | | | Mix for approximately 5 minutes before collecting mixture |

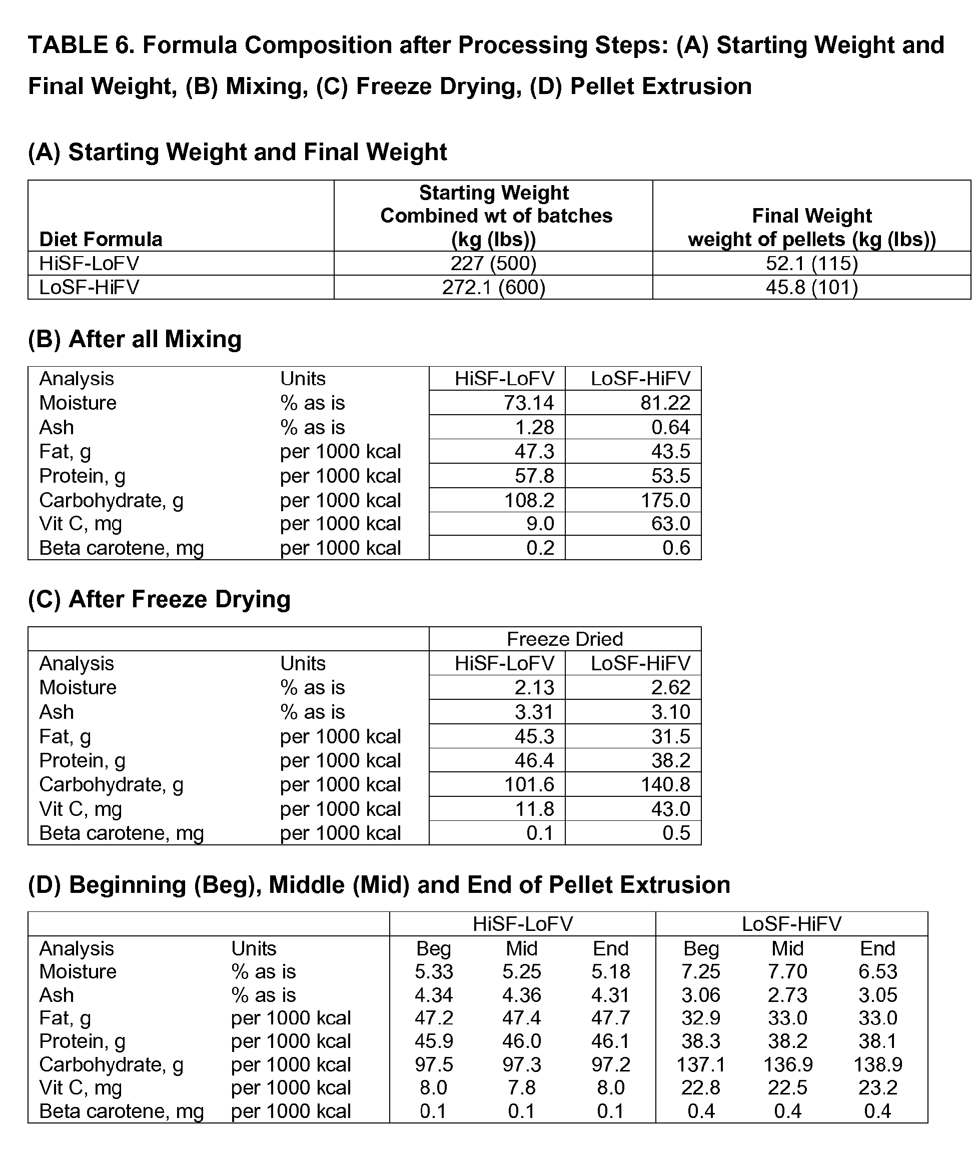

## Claims

1. An animal feed composition consisting of a human diet equivalent, the human diet equivalent consisting of 45-53% by wet weight carbohydrates, 1-4% by wet weight total dietary fiber, 20-25% by wet weight fat, 7-9% total saturated fatty acids of fat, 83- 88 mg cholesterol/100g total human diet equivalent (TD), 19-23% by wet weight protein, 800-1000 mg sodium/100g TD, 300- 500 mg potassium/100g TD, 4-8% by wet weight moisture, and 4.6-4.9 Kcal/g TD; wherein the human diet equivalent is made from a defined ratio of eight food groups, the eight food groups consisting of food items identified by the first three or four digits of an eight digit food code as represented in Table A, wherein (a) milk and milk products have a food code with a first digit of 1 and are 5-25% by wet weight; (b) meat, poultry, fish, egg, nuts, seeds, and legumes have a food code with a first digit selected from the group consisting of 2, 3, and 4 and are 10-25% by wet weight; (c) grain products have a food code with a first digit of 5 and are 10-20% by wet weight; (d) fruits have a food code with a first digit of 6 and are 0-1% by wet weight; (e) vegetables have a food code with a first digit of 7 and are 0-1% by wet weight; (f) fats and oils have a food code with a first digit of 8 and are 0.5-5.0% by wet weight; (g) sugars and sweets have a food code with a first digit of 9 and a second digit of 1 and are 0.5-5.0% by wet weight; and (h) beverages have a food code with a first digit of 9 and a second digit of 2 or 3 and are 10-60% by wet weight.

2. The composition of claim 1, wherein milk and milk products are 18.9% by wet weight; meat, poultry, fish, egg, nuts, seeds, and legumes are 18.0% by wet weight; grain products are 16.3% by wet weight; (d) fruits are 0% by wet weight; vegetables are 0.8% by wet weight; fats and oils are 0.6% by wet weight; sugars and sweets are 1.2% by wet weight, and beverages are 44.2% by wet weight.

3. The composition of claim 1 or 2, wherein the composition is processed into a granule form or a pellet form.

4. The composition according to any preceding claim, for use in an animal feed ration.

5. A process to prepare pelletized animal feed comprising the composition according to any preceding claim, the process comprising
(i) introducing two or more food items independently selected from the group consisting of frozen food items, refrigerated food items, and room temperature food items into a first mixer and blending the food items, wherein the first mixer is a high shear liquid mixer;
(ii) passing and/or recirculating the blended food items into a second mixer to form a homogenous composite, wherein the second mixer is a rotor-stator mixer and the homogenized composite is evenly blended by visual inspection;
(iii) freeze drying the homogenous composite and milling the dehydrated composite to a 20 mesh size, wherein the moisture content of the dehydrated composite is less than 5%;
(iv) adding water to the milled composite and extruding into pellets, wherein the moisture content of the composite at the end of the extrusion process is less than 10%.

6. The process of claim 5, wherein the dehydrated composite is a freeze dried composite with a moisture content of less than 2.7% and/or the moisture content of the extruded pellet is less than 7%.

7. The process of claim 5 or claim 6, wherein the total processing time of steps (i) and (ii) does not exceed two hours.

8. The process of any one of claims 5 to 7, wherein (a) the pellets are packaged and sterilized by gamma irradiation, or (b) the pellets are sterilized by gamma irradiation and packaged.

9. The process of any one of claims 5 to 8 further comprising adding a dietary supplement, wherein:
a dietary supplement may be added during step (i), step (ii), after step (iii) but prior to step (iv); or
a dietary supplement is added to a milled composite of step (iii) prior to processing into a final form.

10. The use of an animal feed composition of any of claims 1-4 for processing into a form for animal consumption.

11. The use according to claim 10 wherein the composition is formulated as chow for a laboratory animal.

12. The use according to claim 10 or 11 wherein a dietary supplement is added during the processing of the composition into a form for animal consumption.

## Patentansprüche

1. Tierfutterzusammensetzung, bestehend aus einem menschlichen Diätäquivalent, wobei das menschliche Diätäquivalent besteht aus 45 bis 53 Feuchtgewichtsprozent Kohlehydraten, 1 bis 4 Feuchtgewichtsprozent gesamten Ballaststoffen, 20 bis 25 Feuchtgewichtsprozent Fett, 7 bis 9 % gesamten gesättigten Fettsäuren des Fetts, 83 bis 88 mg Cholesterin pro 100 g der Gesamtheit des menschlichen Diätäquivalents (TD), 19 bis 23 Feuchtgewichtsprozent Protein, 800 bis 1000 mg Natrium/100 g TD, 300 bis 500 mg Kalium/100 g TD, 4 bis 8 Feuchtgewichtsprozent Feuchtigkeit und 4,6 bis 4,9 kcal/g TD, wobei das menschliche Diätäquivalent aus einem definierten Verhältnis von acht Nahrungsmittelgruppen hergestellt ist, wobei die acht Nahrungsmittelgruppen aus Nahrungsmitteln bestehen, die durch die ersten 3 oder 4 Zahlen eines 8-zahligen Nahrungsmittelcodes, wie in Tabelle A dargestellt, definiert sind, wobei (a) Milch und Milchprodukte einen Nahrungsmittelcode mit einer ersten Zahl von 1 besitzen und 5 bis 25 Feuchtgewichtsprozent ausmachen, (b) Fleisch, Geflügel, Fisch, Eier, Nüsse, Saatgut und Hülsenfrüchte einen Nahrungsmittelcode mit einer ersten Zahl besitzen, die ausgewählt ist aus der Gruppe, bestehend aus 2, 3 und 4, und 10 bis 25 Feuchtgewichtsprozent ausmachen, (c) Getreideprodukte einen Nahrungsmittelcode mit einer ersten Zahl von 5 aufweisen und 10 bis 20 Feuchtgewichtsprozent ausmachen, (d) Obst einen Nahrungsmittelcode mit einer ersten Zahl von 6 besitzt und 0 bis 1 Feuchtgewichtsprozent ausmacht, (e) Gemüse einen Nahrungsmittelcode mit einer ersten Zahl von 7 besitzt und 0 bis 1 Feuchtgewichtsprozent ausmacht, (f) Fette und Öle einen Nahrungsmittelcode mit einer ersten Zahl von 8 besitzen und 0,5 bis 5,0 Feuchtgewichtsprozent ausmachen, (g) Zucker und Süßigkeiten einen Nahrungsmittelcode mit einer ersten Zahl von 9 und einer zweiten Zahl von 1 besitzen und 0,5 bis 5,0 Feuchtgewichtsprozent ausmachen, und (h) Getränke einen Nahrungsmittelcode mit einer ersten Zahl von 9 und einer zweiten Zahl von 2 oder 3 besitzen und 10 bis 60 Feuchtgewichtsprozent ausmachen.

2. Zusammensetzung nach Anspruch 1, worin Milch und Milchprodukte 18,9 Feuchtgewichtsprozent ausmachen, Fleisch, Geflügel, Fisch, Eier, Nüsse, Saatgut und Hülsenfrüchte 18,0 Feuchtgewichtsprozent ausmachen, Getreideprodukte 16,3 Feuchtgewichtsprozent ausmachen, (d) Obst 0 Feuchtgewichtsprozent ausmacht, Gemüse 0,8 Feuchtgewichtsprozent ausmacht, Fette und Öle 0,6 Feuchtgewichtsprozent ausmachen, Zucker und Süßigkeiten 1,2 Feuchtgewichtsprozent ausmachen und Getränke 44,2 Feuchtgewichtsprozent ausmachen.

3. Zusammensetzung nach Anspruch 1 oder 2, worin die Zusammensetzung in eine granuläre Form oder eine Pelletform verarbeitet ist.

4. Zusammensetzung nach einem der vorhergehenden Ansprüche zur Verwendung in einer Tierfutterration.

5. Verfahren zur Herstellung pelletierten Tierfutters, umfassend die Zusammensetzung nach einem der vorhergehenden Ansprüche, wobei das Verfahren umfasst:
(i) Einfüllen von zwei oder mehr Nahrungsmitteln, unabhängig ausgewählt aus der Gruppe, bestehend aus gefrorenen Nahrungsmitteln, gekühlten Nahrungsmitteln und Nahrungsmitteln bei Raumtemperatur, in einen ersten Mischer und Mischen der Nahrungsmittel, wobei der erste Mischer ein Flüssigkeitsmischer mit hoher Schwerkraft ist,
(ii) Überführen und/oder Zurückführen der gemischten Nahrungsmittel in einen zweiten Mischer, um ein homogenes Gemisch zu bilden, wobei der zweite Mischer ein Rotor-Stator-Mischer ist und das homogenisierte Gemisch nach visueller Untersuchung gleichmäßig gemischt ist,
(iii) Gefriertrocknen des homogenen Gemisches und Vermahlen des dehydrierten Gemisches auf eine Größe von 20 Mesh, wobei der Feuchtigkeitsgehalt des dehydrierten Gemisches geringer als 5 % ist,
(iv) Zugabe von Wasser zu dem vermahlenen Gemisch und Extrudieren zu Pellets, wobei der Feuchtigkeitsgehalt des Gemisches am Ende des Extrusionsprozesses geringer als 10 % ist.

6. Verfahren nach Anspruch 5, worin das dehydrierte Gemisch ein gefriergetrocknetes Gemisch mit einem Feuchtigkeitsgehalt von weniger als 2,7 % ist und/oder der Feuchtigkeitsgehalt des extrudierten Pellets geringer als 7 % ist.

7. Verfahren nach Anspruch 5 oder Anspruch 6, worin die Gesamtverarbeitungszeit der Schritte (i) und (ii) zwei Stunden nicht übersteigt.

8. Verfahren nach einem der Ansprüche 5 bis 7, worin (a) die Pellets verpackt und durch Gammabestrahlung sterilisiert werden oder (b) die Pellets durch Gammabestrahlung sterilisiert und verpackt werden.

9. Verfahren nach einem der Ansprüche 5 bis 8, weiter umfassend die Zugabe eines Nahrungsergänzungsmittels, wobei:
ein Nahrungsergänzungsmittel während Schritt (i), Schritt (ii), nach Schritt (iii), aber vor Schritt (iv) zugesetzt wird oder
ein Nahrungsergänzungsmittel zu einem vermahlenen Gemisch des Schritts (iii) vor der Verarbeitung in eine Endform zugesetzt wird.

10. Verwendung einer Tierfutterzusammensetzung nach einem der Ansprüche 1 bis 4 zur Verarbeitung in eine Form für den Tierverzehr.

11. Verwendung nach Anspruch 10, wobei die Zusammensetzung als Futter für ein Laborversuchstier formuliert ist.

12. Verwendung nach Anspruch 10 oder 11, worin das Nahrungsergänzungsmittel während der Verarbeitung der Zusammensetzung in eine Form für den Tierverzehr zugesetzt wird.

## Revendications

1. Composition d'alimentation pour animaux constituée d'un équivalent au régime alimentaire humain, l'équivalent au régime alimentaire humain étant constitué de 45-53 % en poids humide de glucides, 1-4 % en poids humide de fibres alimentaires totales, 20-25 % en poids humide de matières grasses, 7-9 % d'acides gras saturés totaux de matières grasses, 83-88 mg de cholestérol/100 g d'équivalent au régime alimentaire humain total (TD), 19-23 % en poids humide de protéines, 800-1000 mg de sodium/100 g TD, 300-500 mg de potassium/100 g TD, 4-8 % en poids humide d'humidité et 4,6-4,9 Kcal/g TD ; ledit équivalent au régime alimentaire humain étant fabriqué à partir d'un rapport défini de huit groupes d'aliments, les huit groupes d'aliments étant constitués d'aliments identifiés par les trois ou quatre premiers chiffres d'un code alimentaire à huit chiffres tel que représenté dans le tableau A, (a) le lait et les produits laitiers possédant un code alimentaire avec un premier chiffre de 1 et représentant 5-25 % en poids humide ; (b) la viande, la volaille, le poisson, les œufs, les noix, les graines et les légumineuses possédant un code alimentaire avec un premier chiffre sélectionné dans le groupe constitué par 2, 3 et 4 et représentant 10-25 % en poids humide ; (c) les produits céréaliers possédant un code alimentaire avec un premier chiffre de 5 et représentant 10-20 % en poids humide; (d) les fruits possédant un code alimentaire avec un premier chiffre de 6 et représentant 0-1 % en poids humide ; (e) les légumes possédant un code alimentaire avec un premier chiffre de 7 et représentant 0-1 % en poids humide ; (f) les matières grasses et les huiles possédant un code alimentaire avec un premier chiffre de 8 et représentant 0,5-5,0 % en poids humide ; (g) les sucres et les sucreries possédant un code alimentaire avec un premier chiffre de 9 et un deuxième chiffre de 1 et représentant 0,5-5,0 % en poids humide ; et (h) les boissons possédant un code alimentaire avec un premier chiffre de 9 et un deuxième chiffre de 2 ou 3 et représentant 10-60 % en poids humide.

2. Composition selon la revendication 1, ledit lait et lesdits produits laitiers représentant 18,9 % en poids humide ; ladite viande, ladite volaille, ledit poisson, lesdits œufs, lesdites noix, lesdites graines et lesdites légumineuses représentant 18,0 % en poids humide; lesdits produits céréaliers représentant 16,3 % en poids humide ; (d) lesdits fruits représentant 0 % en poids humide ; lesdits légumes représentant 0,8 % en poids humide ; lesdites matières grasses et lesdites huiles représentant 0,6 % en poids humide ; lesdits sucres et lesdites sucreries représentant 1,2 % en poids humide et lesdites boissons représentant 44,2 % en poids humide.

3. Composition selon la revendication 1 ou 2, ladite composition étant transformée sous forme de granulés ou de pastilles.

4. Composition selon l'une quelconque des revendications précédentes, destinée à être utilisée dans une ration alimentaire pour animaux.

5. Procédé pour préparer l'alimentation pour animaux en pastilles comprenant la composition selon l'une quelconque des revendications précédentes, le procédé comprenant
(i) l'introduction de deux aliments, ou plus, choisis indépendamment dans le groupe constitué d'aliments surgelés, d'aliments réfrigérés et d'aliments à température ambiante dans un premier mélangeur et le mélange des aliments, ledit premier mélangeur étant un mélangeur liquide à cisaillement élevé ;
(ii) le passage et/ou la recirculation des aliments mélangés dans un second mélangeur pour former un composite homogène, ledit second mélangeur étant un mélangeur rotor-stator et le composite homogénéisé étant mélangé uniformément par inspection visuelle ;
(iii) la lyophilisation du composite homogène et le broyage du composite déshydraté jusqu'à une taille de 20 mailles, la teneur en humidité du composite déshydraté étant inférieure à 5 % ;
(iv) l'ajout d'eau au composite broyé et l'extrusion en pastilles, ladite teneur en humidité du composite à la fin du processus d'extrusion étant inférieure à 10 %.

6. Procédé selon la revendication 5, ledit composite déshydraté étant un composite lyophilisé avec une teneur en humidité inférieure à 2,7 % et/ou la teneur en humidité de la pastille extrudée étant inférieure à 7 %.

7. Procédé selon la revendication 5 ou 6, ledit temps de transformation total des étapes (i) et (ii) ne dépassant pas deux heures.

8. Procédé selon l'une quelconque des revendications 5 à 7, (a) lesdites pastilles étant emballées et stérilisées par rayonnement gamma, ou (b) les pastilles étant stérilisées par rayonnement gamma et emballées.

9. Procédé selon l'une quelconque des revendications 5 à 8, comprenant en outre l'ajout d'un complément alimentaire,
un complément alimentaire pouvant être ajouté durant l'étape (i), l'étape (ii), après l'étape (iii) mais avant l'étape (iv) ; ou
un complément alimentaire étant ajouté à un composite broyé de l'étape (iii) avant d'être transformé en une forme finale.

10. Utilisation d'une composition d'alimentation pour animaux selon l'une quelconque des revendications 1 à 4 en vue de la transformation en une forme destinée à la consommation animale.

11. Utilisation selon la revendication 10, ladite composition étant formulée sous forme de nourriture pour un animal de laboratoire.

12. Utilisation selon la revendication 10 ou 11, un complément alimentaire étant ajouté durant la transformation de la composition en une forme destinée à la consommation animale.
